# EUROPÄISCHE PATENTSCHRIFT

(11) **EP 1 609 818 B1**
(45) Veröffentlichungstag und Bekanntmachung des Hinweises auf die Patenterteilung: **10.03.2010**
(21) Anmeldenummer: 05012973.3
(22) Anmeldetag: 16.06.2005
(51) Int. Cl.: C08K 5/42, C08K 5/46, C08K 5/435

(54) **Thermostabilisierte Polycarbonat-Zusammensetzungen**
Heat stabilised polycarbonate compositions
Compositions de polycarbonate stabilisées contre la chaleur

(30) Priorität: 24.06.2004 DE 102004030664; 27.11.2004 DE 102004057349
(43) Veröffentlichungstag der Anmeldung: 28.12.2005
(73) Patentinhaber: Bayer MaterialScience AG, 51368 Leverkusen (DE)
(72) Erfinder: Heuer, Helmut-Werner, Dr., 47829 Krefeld (DE); Möthrath, Melanie, Dr., 40223 Düsseldorf (DE)

(56) Entgegenhaltungen:
- EP-A- 0 520 805
- EP-A- 0 753 540
- EP-A- 1 221 459
- EP-A2- 0 794 218
- GB-A- 2 160 519
- US-A- 5 274 009
- US-A- 5 606 007
- US-A- 5 668 202
- US-A1- 2001 041 759
- PATENT ABSTRACTS OF JAPAN Bd. 1997, Nr. 03, 31. März 1997 (1997-03-31) & JP 08 311324 A (MITSUBISHI ENG PLAST KK), 26. November 1996 (1996-11-26) -& DATABASE CA [Online] CHEMICAL ABSTRACTS SERVICE, COLUMBUS, OHIO, US; MYA, SHINYA ET AL: "Preparation of ionizing radiation-resistant polycarbonate compositions" XP002407454 gefunden im STN Database accession no. 1997:107230 & JP 08 311324 A2 (MITSUBISHI ENJINIARINGU PURASUCHIKKUSU, JAPAN) 26. November 1996 (1996-11-26)
- PATENT ABSTRACTS OF JAPAN Bd. 002, Nr. 100 (C-020), 18. August 1978 (1978-08-18) & JP 53 064262 A (MITSUBISHI GAS CHEM CO INC), 8. Juni 1978 (1978-06-08)
- PATENT ABSTRACTS OF JAPAN Bd. 1997, Nr. 02, 28. Februar 1997 (1997-02-28) & JP 08 276655 A (NIPPON STEEL CHEM CO LTD; NIPPON STEEL CORP), 22. Oktober 1996 (1996-10-22)
- DATABASE CA [Online] CHEMICAL ABSTRACTS SERVICE, COLUMBUS, OHIO, US; FUNAKOSHI, WATARU ET AL: "Manufacture of hydrolysis- and weather-resistant aromatic polycarbonates" XP002407453 gefunden im STN Database accession no. 1995:922137 & JP 07 224161 A2 (TEIJIN LTD, JAPAN) 22. August 1995 (1995-08-22)

## Beschreibung

Gegenstand dieser Erfindung sind Zusammensetzungen mit verbesserter Thermostabilität enthaltend Polycarbonat und Ester von organischen Schwefel-enthaltenden Säuren sowie Formkörper und Extrudate aus diesen modifizierten Polycarbonat-Zusammensetzungen, wobei die Zusammensetzungen weiterhin auch Abbauprodukte der Ester von organischen Schwefel-enthaltenen Säuren enthalten können.

Die Herstellverfahren für Polycarbonat sind literaturbekannt und in vielen Anmeldungen beschrieben:

Zur Herstellung von Polycarbonaten nach dem Phasengrenzflächen- oder dem Schmelzeumesterungsverfahren sei beispielhaft auf "Schnell", Chemistry and Physics of Polycarbonates, Polymer Reviews, Vol. 9, Interscience Publishers, New York, London, Sydney 1964, S. 33 ff. und auf Polymer Reviews, Volume 10, "Condensation Polymers by Interfacial and Solution Methods", Paul W. Morgan, Interscience Publishers, New York 1965, Kap. VIII, S. 325 und EP-A 971790 verwiesen.

Polycarbonate benötigen unter dem Einfluss von hohen Temperaturen Stabilisatoren gegen Verfärbungen, chemische Reaktionen der Additive und Abbaureaktionen. Besonders Polycarbonattypen für optische Anwendungen können bei der weiteren Verarbeitung hohen Temperaturbelastungen ausgesetzt sein, die zu der unerwünschten Bildung von Monomeren durch Abbaureaktionen, dem Verlust an Molekulargewicht oder zu chemischen Reaktionen von Additiven, wie beispielsweise den Einbau in die Polymerkette sowie den Abbau der Additive, die die Wirksamkeit der Additive negativ beeinflussen, führen.

Bekannt ist die Stabilisierung gegen hohe Temperaturen mit Phosphor-organischen Verbindungen wie Phosphinen (US 4 092 288 B) oder Phosphiten (JP 54036363 A). Bekannt ist ebenfalls die Stabilisierung mit Oniumsalzen, wie Tetraalkyl-phosphonium- und -ammonium-Salzen, der Dodecylbenzolsulfonsäure und mit Säuren bzw. eines einfachen Säureesters einer Säure, die ein Schwefelatom enthält, wie n-Butyltosylat (JP 08-059975 A).

Phosphor-organische Thermostabilisatoren werden üblicherweise in Größenordnungen von mehreren 100 ppm dem Polycarbonat zugesetzt. Speziell bei Polycarbonattypen für optische Anwendungen wird aber angestrebt, nur minimalste Mengen an Additiven zu verwenden. So sollen unerwünschte Effekte der Partikelbildung oder Abformungsprobleme im Spritzguss unterdrückt und eine positive Gesamtperformance des Materials gewährleistet werden.

Aus Gründen der Wirtschaftlichkeit sind ebenfalls nur äußerst geringe Mengen an Additiven wünschenswert.

Als nachteilig erweisen sich bei den beschriebenen freien Säuren und leicht spaltbaren Estern deren korrosive Eigenschaften bei hohen Temperaturen und Konzentration, wie sie beispielsweise bei einer technischen Dosierung der Stabilisatoren auftreten können. Es ist von großem Vorteil, Stabilisatoren einzusetzen, die die Werkstoffe der Apparate nicht in Mitleidenschaft ziehen, um Partikeln, metallischen Kationen und Sicherheitsmängeln vorzubeugen. Weiterhin sind ein Großteil der beschriebenen freien Säuren und leicht spaltbaren Estern leicht flüchtig. Das erschwert eine unabdingbare konstante und saubere Dosierung der Quencher bei einer kontinuierlichen Einmischung in den Schmelzestrom.

Ein weiterer Nachteil vieler Säureesterstabilisatoren ist, dass sie zu schnell große Mengen an freien Säuren generieren. Ein Überschuss an freier Säure katalysiert beispielsweise Reaktionen der Polycarbonate mit anderen Additiven wie Entformungsmitteln oder fördert sogar Rückreaktionen in Falle des Schmelzepolycarbonats mit Phenol unter Freisetzung von Diphenylcarbonat. Kleine Mengen an überschüssiger ester-gebundener Säure, die die freie Säure sehr langsam unter thermischer Belastung bei einer Weiterverarbeitung des stabilisierten Polycarbonats freisetzen, sind dagegen durchaus gewünscht. Sie erhöhen die thermische Belastbarkeit des Polycarbonats.

Es stellte sich daher die Aufgabe, Thermostabilisatoren für Polycarbonat zu finden, welche nur in geringen Mengen eingesetzt werden müssen, nicht korrosiv und schwer flüchtig sowie gleichzeitig leicht löslich und dosierbar in inerten Lösungsmitteln oder prozesseigenen Komponenten sind. Ebenfalls sollten die Stabilisatoren nie größere Überschüsse an freier Säure im Polycarbonat generieren, um Abbaureaktionen von Polycarbonat unter Bildung von Carbonaten zu vermeiden oder auch Reaktionen mit den Additiven zu unterbinden. Statt dessen ist eine langsame Generierung der freien Säuren gewünscht. Dabei ist besonders wünschenswert, wenn der Stabilisator während der Einarbeitung in das Polycarbonat und eventuellen Folgeschritten nicht komplett alle mögliche freie Säure bildet. So kann er bei einer Weiterverarbeitung nach Granulierung des Polycarbonats, wie zum Beispiel Spritzgießen, erneut Wirkung zeigen (Langzeitwirkung durch sukzessives Freisetzen der freien Säure bei sämtlichen thermischen Belastungsschritten).

Überraschend wurde nun gefunden, dass Ester von organischen Schwefel-enthaltenden Säuren die gewünschten Eigenschaften ausgewogen vereinigen und hervorragend zur Thermostabilisierung von Polycarbonaten geeignet sind. So setzen diese Stabilisatoren überraschenderweise nur langsam und in Stufen die korrespondieren freien Säuren frei. Außerdem sind sie an sich so wenig flüchtig, dass sie auch bei längeren Verweilzeiten kaum aus der Polycarbonatschmelze ausdampfen.

### Angepasste Beschreibungsseiten:

Überraschenderweise zeigen die Stabilisatoren auch bei hohen Temperaturen und Konzentrationen kein korrosives Verhalten gegenüber den üblicherweise verwendeten metallischen Werkstoffen wie beispielsweise 1.4571 oder 1. 4541 (Stahlschlüssel 2001, Verlag: Stahlschlüssel Wegst GmbH, Th-Heuss-Straße 36, D-71672 Marbach) und Ni-Basislegierungen vom Typ C, wie z. B. 2.4605 oder 2.4610 (Stahlschlüssel 2001, Verlag: Stahlschlüssel Wegst GmbH, Th-Heuss-Straße 36, D-71672 Marbach).

Dies ist insbesondere erstaunlich, als man bei der Stabilisierung von Polycarbonat im allgemeinen keine Voraussagen treffen kann, ob die Stabilisatoren die gewünschten Eigenschaften wie schwache Flüchtigkeit, Löslichkeit in prozessinhärenten Lösungsmitteln, Korrosionsfreiheit und langsame Säurefreisetzung im richtigen Maß vereinigen.

Gegenstand dieser Erfindung sind daher Zusammensetzungen mit verbesserter Thermostabilität enthaltend Polycarbonat und bestimmte Ester von organischen Schwefel-enthaltenden Säuren, sowie Formkörper und Extrudate aus diesen modifizierten Polycarbonat-Zusammensetzungen, wobei die Zusammensetzungen weiterhin auch Abbauprodukte dieser Ester enthalten können.

Gegenstand der vorliegenden Erfindung ist daher eine Zusammensetzung enthaltend Polycarbonat und einen Ester von organischen Schwefel-enthaltenden Säuren ausgewählt aus mindestens einer Verbindung
der Formel (I) 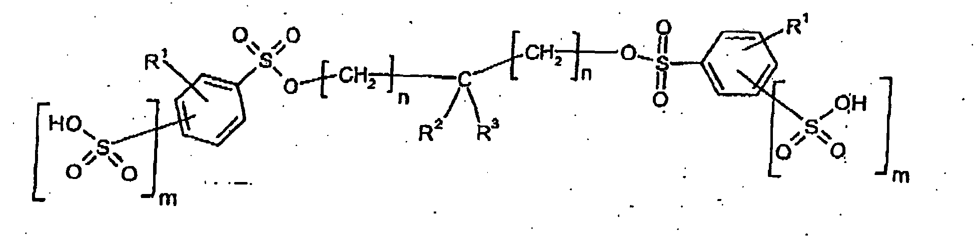 e) der Formel (VIIb) oder (Ib), 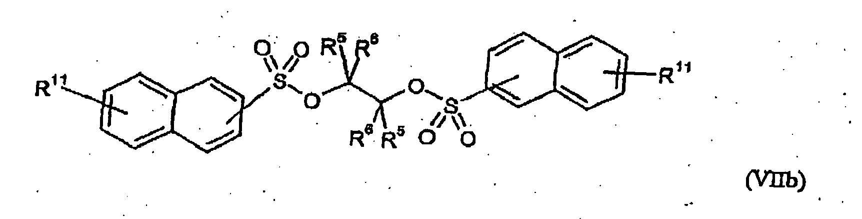 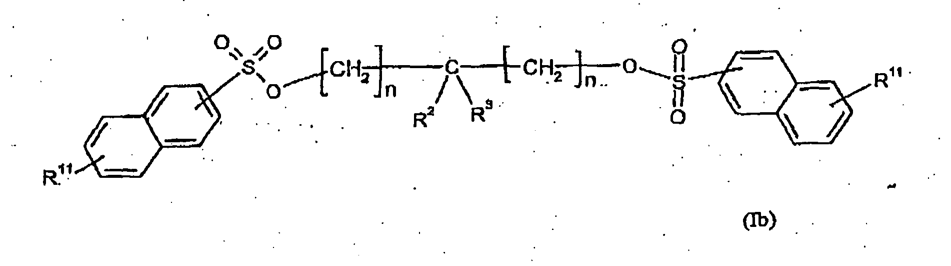 in welcher
- R¹: unabhängig für Wasserstoff oder unsubstituiertes oder durch Halogen substituiertes C₁-C₂₀-Alkyl steht,
- R² und: R³ unabhängig voneinander für Wasserstoff, C₁-C₆-Alkyl oder C₄-C₃₀-Alkylcarboxyl oder für den Rest steht 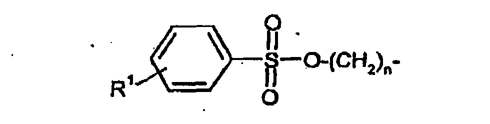
worin
- R¹: die oben genannte Bedeutung hat,
- m: für 0 oder 1 steht,
- n: für 1 oder 2 steht,
- R⁵ und R⁶: unabhängig für Wasserstoff oder für C₁-C₂₀-Alkyl, wobei Alkyl durch Halogen substituiert sein kann, und
- R¹¹: unabhängig für Wasserstoff oder Di-(C₁-C₄)-Alkylamino steht,
wobei der Ester in einer positioven Menge von bis zu 100 ppm bezogen auf das Gewicht der Polycarbonats enthalten ist.

Bevorzugte erfindungsgemäß geeignete Thermostabilisatoren sind Ester von organischen Schwefel-enthaltenden Säuren ausgewählt aus mindestens einer Verbindung
der Formel (I) 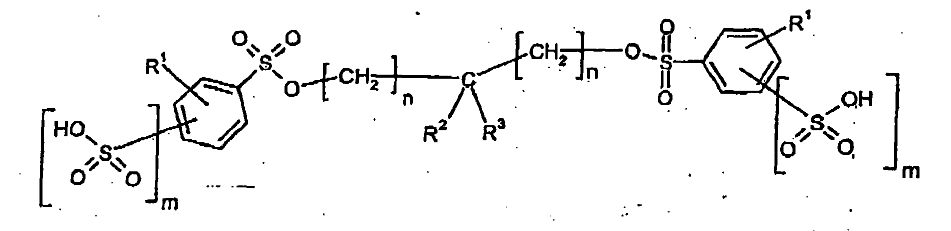
e) der Formel oder (VIIb) 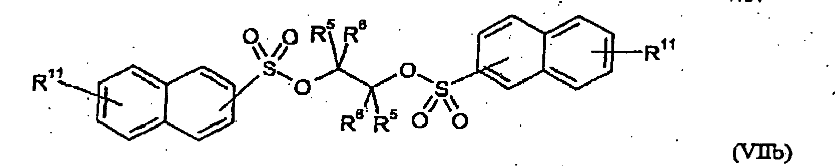
wobei die Reste R¹, R², R³, m und n die in sowie R⁵, R⁶ und R¹¹ die in Anspruch 1 genannte Bedeutung haben.

Besonders bevorzugt sind folgende Themostabilisatoren der Formeln (Ia) bis (If):

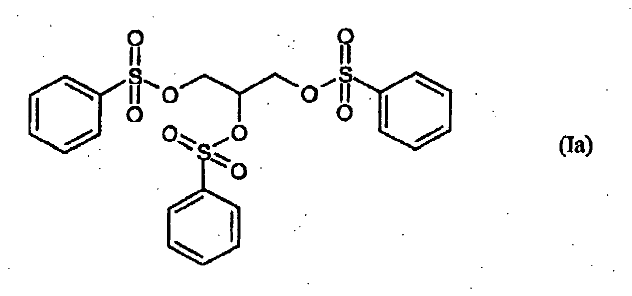

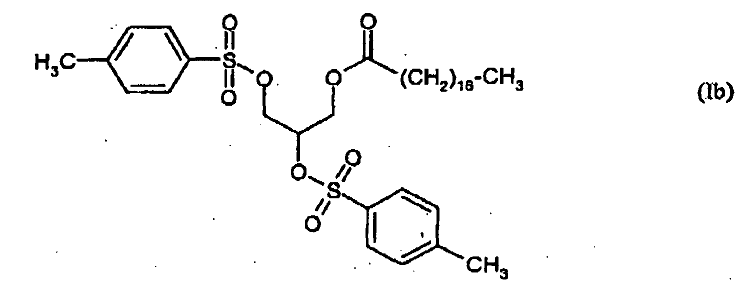

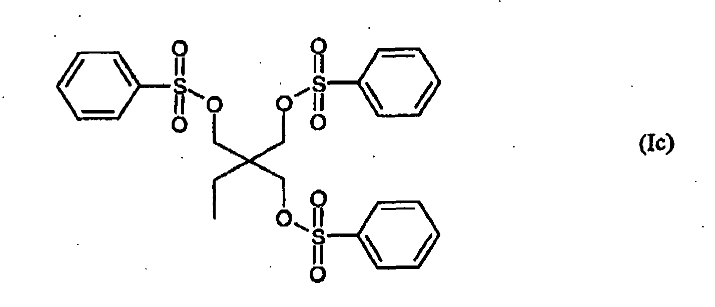

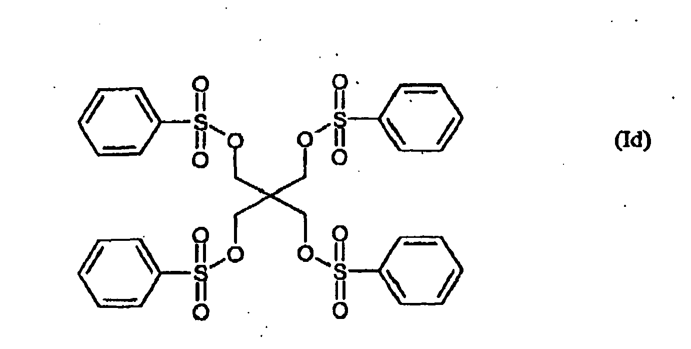

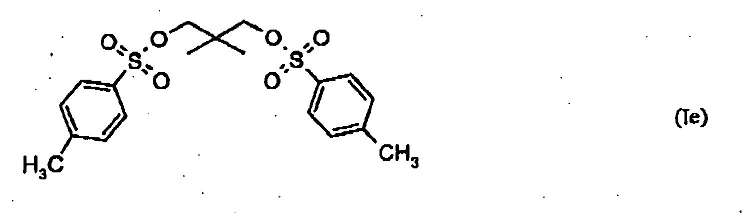

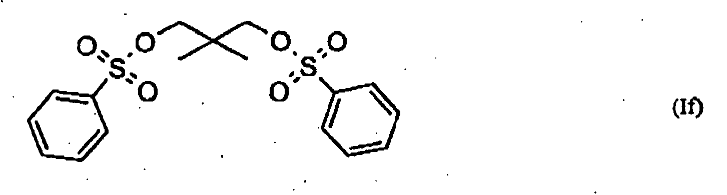

Die erfindungsgemäßen Thermostabilisatoren können einzeln oder in beliebigen Mischungen oder mehreren verschiedenen Mischungen der Polymerschmelze zugesetzt werden. Die erfindungsgemäßen Thermostabilisatoren können auch in Mischungen mit freien Säuren, wie beispielsweise ortho-Phosphorsäure, zugesetzt werden.

Die Herstellung der erfindungsgemäßen Ester von organischen Schwefel-enthaltenden Säuren erfolgt nach üblichen Methoden beispielsweise durch Alkoholyse aus dem Benzolsulfonsäurechlorid bzw. Toluolsulfonsäurechlorid mit den entsprechenden mehrfunktionellen Alkoholen (vgl. Organikum, Wiley-VCH Verlag, 20. Auflage, Weinheim, S. 606 /1999).

Das Polycarbonat kann beispielsweise nach dem Schmelzeumesterungsverfahren hergestellt werden. Die Herstellung von aromatischen Oligo- bzw. Polycarbonaten nach dem Schmelzumesterungsverfahren ist literaturbekannt und beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in der DE-C 10 31 512, US-A 3,022,272, US-A 5,340,905 und US-A 5,399,659 vorbeschrieben.

Gemäß diesem Verfahren werden aromatische Dihydroxyverbindungen, mit Kohlensäurediestern unter Zuhilfenahme von geeigneten Katalysatoren und gegebenenfalls weiteren Zusatzstoffen in der Schmelze umgeestert.

Zur Durchführung des Verfahrens kann beispielsweise eine Anlagenkonzeption, wie sie in WO 02/077 067 dargestellt ist, benutzt werden.

Für die Herstellung von Polycarbonaten sind geeignete Dihydroxyarylverbindungen solche der Formel (XII)

HO-Z-OH (XII)

in welcher Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Beispiele für Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kernalkylierte und kemhalogenierte Verbindungen.

Diese und weitere geeignete andere Dihydroxyarylverbindungen sind z.B. in den US-Patentschriften 2 970 131, 2 991 273, 2 999 835, 2 999 846, 3 028 365, 3 062 781, 3 148 172, 3 271 367, 3 275 601, 4 982 014, in den deutschen Patentschriften 1 570 703, 2 063 050, 2 036 052, 2 211 956, 3 832 396, der französischen Patentschrift 1 561 518, und in der Monographie "H. Schnell, Chemistry and Physics of Polycarbonates, Interscience Publishers, New York 1964", S. 28ff; S.102ff", und in "D.G. Legrand, J.T. Bendler, Handbook of Polycarbonate Science and Technology, Marcel Dekker New York 2000, S. 72ff." beschrieben.

Bevorzugte Dihydroxyarylverbindungen sind beispielsweise: Resorcin, 4,4'-Dihydroxydiphenyl, Bis-(4-hydroxyphenyl)-methan, Bis-(3,5-dimethyl-4-hydroxyphenyl)-methan, Bis-(4-hydroxyphenyl)-diphenyl-methan, 1,1-Bis-(4-hydroxyphenyl)-1-phenyl-ethan, 1,1-Bis-(4-hydroxyphenyl)-1-(1-naphthyl)-ethan, 1,1-Bis-(4-hydroxyphenyl)-1-(2-naphthyl)-ethan, 2,2-Bis-(4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-1-phenyl-propan, 2,2-Bis-(4-hydroxyphenyl)-hexafluor-propan, 2,4-Bis-(4-hydroxyphenyl)-2-methyl-butan, 2,4-Bis-(3,5-dimethyl-4-hydroxyphenyl)-2-methylbutan, 1, 1-Bis-(4-hydroxyphenyl)-cyclohexan, 1,1-Bis-(3,5-dimethyl-4-hydroxyphenyl)-cyclohexan, 1, 1-Bis-(4-hydroxyphenyl)-4-methyl-cyclohexan, 1, 1-Bis-(4-hydroxyphenyl)-3,3,5-trimethyl-cyclohexan, 1,3-Bis-[2-(4-hydroxyphenyl)-2-propyl]-benzol, 1,1'- Bis-(4-hydroxyphenyl)-3-diisopropyl-benzol, 1,1'-Bis-(4-hydroxyphenyl)-4-diisopropyl-benzol, 1,3-Bis-[2-(3,5-dimethyl-4-hydroxyphenyl)-2-propyl]-benzol, Bis-(4-hydroxyphenyl)-ether, Bis-(4-hydroxyphenyl)-sulfid, Bis-(4-hydroxyphenyl)-sulfon, Bis-(3,5-dimethyl-4-hydroxyphenyl)-sulfon und 2,2',3,3'-Tetra-hydro-3,3,3',3'-tetramethyl-1,1'-spirobi-5-[1H-inden]-5,5'-diol.

Besonders bevorzugte Dihydroxyarylverbindungen sind: Resorcin, 4,4'-Dihydroxydiphenyl, Bis-(4-hydroxyphenyl)-diphenyl-methan, 1,1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1 -Bis-(4-hydroxyphenyl)-cyclohexan, 1,1-Bis-(3,5-dimethyl-4-hydroxyphenyl)-cyclohexan, 1,1 -Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugt sind: 4,4'-Dihydroxydiphenyl, 2,2-Bis-(4-hydroxyphenyl)-propan und Bis-(4-hydroxyphenyl)-3,3,5-trimethyl-cyclohexan.

Es können sowohl eine Dihydroxyarylverbindung unter Bildung von Homopolycarbonaten als auch verschiedene Dihydroxyarylverbindungen unter Bildung von Copolycarbonaten verwendet werden.

Anstelle der monomeren Dihydroxyarylverbindungen können auch niedermolekulare, überwiegend OH-endgruppengestoppte Oligocarbonate als Ausgangsverbindung eingesetzt werden.

Die Dihydroxyarylverbindungen können auch mit Restgehalten der Monohydroxyarylverbindungen, aus denen sie hergestellt wurden bzw. die niedermolekularen Oligocarbonate mit Restgehalten der Monohydroxyarylverbindungen, die bei der Herstellung der Oligomeren abgespalten wurden, eingesetzt werden. Die Restgehalte der Monomerhydroxyarylverbindungen können bis zu 20 %, vorzugsweise 10 %, besonders bevorzugt bis 5 % und ganz besonders bevorzugt bis zu 2 % betragen (s. z.B. EP-A 1 240 232).

Die verwendeten Dihydroxyarylverbindungen, wie auch alle anderen der Synthese zugesetzten Rohstoffe, Chemikalien und Hilfsstoffe können mit den aus ihrer eigenen Synthese, Handhabung und Lagerung stammenden Verunreinigungen kontaminiert sein, obwohl es wünschenswert und Ziel ist, mit möglichst sauberen Rohstoffen, Chemikalien und Hilfsstoffen zu arbeiten.

Die für die Umsetzung mit den Dihydroxyarylverbindungen geeigneten Diarylcarbonate sind solche der Formel (XIII) 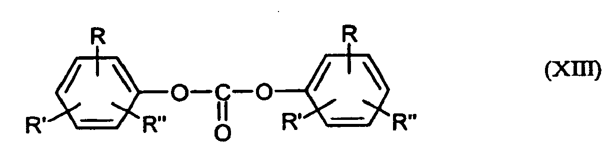 wobei R, R' und R" unabhängig voneinander gleich oder verschieden für Wasserstoff, gegebenenfalls verzweigtes C₁-C₃₄ Alkyl, C₇-C₃₄-Alkylaryl oder C₆-C₃₄-Aryl stehen, R weiterhin auch -COO-R''' bedeuten kann, wobei R''' für Wasserstoff, gegebenenfalls verzweigtes C₁-C₃₄ Alkyl, C₇-C₃₄-Alkylaryl oder C₆-C₃₄-Aryl steht.

Solche Diarylcarbonate sind beispielsweise: Diphenylcarbonat, Methylphenyl-phenyl-carbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat,4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Bevorzugte Diarylverbindungen sind: Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat und Di-[4-(1-methyl-1-phenylethyl)-phenyl]-carbonat.

Besonders bevorzugt ist: Diphenylcarbonat.

Die Diarylcarbonate können auch mit Restgehalten der Monohydroxyarylverbindungen, aus denen sie hergestellt wurden, eingesetzt werden. Die Restgehalte der Monohydroxyarylverbindungen können bis zu 20 %, vorzugsweise 10 %, besonders bevorzugt bis 5 % und ganz besonders bevorzugt bis zu 2 % betragen.

Bezogen auf die Dihydroxyarylverbindung werden die Diarylcarbonate im Allgemeinen mit 1,02 bis 1,30 Mol, bevorzugt mit 1,04 bis 1,25 Mol, besonders bevorzugt mit 1,06 bis 1,22 Mol, ganz besonders bevorzugt mit 1,06 bis 1,20 Mol pro Mol Dihydroxyarylverbindung eingesetzt. Es können auch Mischungen der oben genannten Diarylcarbonate eingesetzt werden.

Zur Steuerung bzw. Veränderung der Endgruppen kann zusätzlich eine Monohydroxyarylverbindung eingesetzt werden, die nicht zur Herstellung des verwendeten Diarylcarbonats benutzt wurde. Sie wird durch folgende allgemeine Formel (XIV) dargestellt: 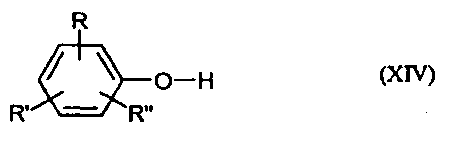 wobei R, R' und R" die bei Formel (XIII) genannte Bedeutung haben mit der Maßgabe, dass in diesem Fall R nicht H sein kann, wohl aber R' und R" H sein können.

Solche Monohydroxyarylverbindungen sind beispielsweise: 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat.

Bevorzugt sind: 4-tert-Butylphenol, 4-iso-Octylphenol und 3-Pentadecylphenol.

Dabei ist eine Monohydroxyarylverbindung zu wählen, deren Siedepunkt über dem der Monohydroxyarylverbindung liegt, die zur Herstellung des verwendeten Diarylcarbonates eingesetzt wurde. Die Monohydroxyarylverbindung kann zu jedem Zeitpunkt im Reaktionsverlauf zugegeben werden. Sie wird bevorzugt zu Beginn der Reaktion zugegeben oder aber auch an beliebiger Stelle im Verfahrensverlauf. Der Anteil an freier Monohydroxyarylverbindung kann 0,2 bis 20 Mol %, bevorzugt 0,4 bis 10 Mol %, bezogen auf die Dihydroxyarylverbindung, betragen.

Die Endgruppen können auch durch Mitverwendung eines Diarylcarbonates, dessen Basis-Monohydroxyarylverbindung einen höheren Siedepunkt hat als die Basis- Monohydroxyarylverbindung des hauptsächlich eingesetzten Diarylcarbonates, verändert werden. Auch hier kann das Diarylcarbonat zu jedem Zeitpunkt im Reaktionsverlauf zugegeben werden. Es wird bevorzugt zu Beginn der Reaktion zugegeben oder aber auch an beliebiger Stelle im Verfahrensverlauf. Der Anteil des Diarylcarbonates mit der höher siedenden Basis-Monohydroxyarylverbindung an der gesamt eingesetzten Diarylcarbonatmenge kann 1 bis 40 Mol %, bevorzugt 1 bis 20 Mol % und besonders bevorzugt 1 bis 10 Mol % betragen.

Als Katalysatoren werden im Schmelzumesterungsverfahren zur Herstellung von Polycarbonaten die in der Literatur bekannten basischen Katalysatoren wie beispielsweise Alkali- und Erdalkalihydroxyde und -oxyde, aber auch Ammonium- oder Phosphoniumsalze, im folgenden als Oniumsalze bezeichnet, eingesetzt. Bevorzugt werden bei der Synthese Oniumsalze, besonders bevorzugt Phosphoniumsalze eingesetzt. Phosphoniumsalze im Sinne der Erfindung sind solche der allgemeinen Formel (XV) 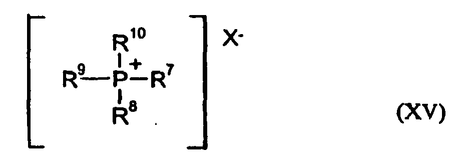 wobei R⁷⁻¹⁰ dieselben oder verschiedene C₁-C₁₀-Alkyle, C₆-C₁₄-Aryle, C₇-C₁₅-Arylalkyle oder C₅-C₆-Cycloalkyle, bevorzugt Methyl oder C₆-C₁₄-Aryle, besonders bevorzugt Methyl oder Phenyl sein können, und X⁻ ein Anion wie Hydroxyd, Sulfat, Hydrogensulfat, Hydrogencarbonat, Carbonat oder ein Halogenid, bevorzugt Chlorid oder ein Alkylat bzw. Arylat der Formel -OR sein kann, wobei R ein C₆-C₁₄-Aryl, C₇-C₁₅-Arylalkyl oder C₅-C₆-Cycloalkyl, bevorzugt Phenyl sein kann.

Bevorzugte Katalysatoren sind Tetraphenylphosphoniumchlorid, Tetraphenylphosphoniumhydroxid und Tetraphenylphosphoniumphenolat, besonders bevorzugt ist Tetraphenylphosphoniumphenolat.

Sie werden bevorzugt in Mengen von 10⁻⁸ bis 10⁻³ mol, bezogen auf ein mol Dihydroxyarylverbindung, besonders bevorzugt in Mengen von 10⁻⁷ bis 10⁻⁴ mol, eingesetzt.

Weitere Katalysatoren können allein oder zusätzlich zu dem Oniumsalz als Cokatalysator verwendet werden, um die Geschwindigkeit der Polykondensation zu erhöhen.

Dazu gehören die alkalisch wirkenden Salze von Alkalimetallen und Erdalkalimetallen, wie Hydroxyde, Alkoxyde und Aryloxyde von Lithium, Natrium und Kalium, vorzugsweise Hydroxyde, Alkoxyde oder Aryloxyde von Natrium. Am meisten bevorzugt sind Natriumhydroxyd und Natriumphenolat, sowie auch das Dinatriumsalz des 2,2-Bis-(4-hydroxyphenyl)-propans.

Die Mengen der alkalisch wirkenden Salze von Alkalimetallen und Erdalkalimetallen allein oder als Cokatalysator können im Bereich von 1 bis 500 ppb, vorzugsweise 5 bis 300 ppb und am meisten bevorzugt 5 bis 200 ppb liegen, jeweils berechnet als Natrium und bezogen auf zu bildendes Polycarbonat.

Die alkalisch wirkenden Salze von Alkalimetallen und Erdalkalimetallen können schon bei der Herstellung der Oligocarbonate, das heißt zu Beginn der Synthese, eingesetzt oder aber auch erst vor der Polykondensation zugemischt werden, um unerwünschte Nebenreaktionen zu unterdrücken.

Weiter besteht auch die Möglichkeit, ergänzende Mengen Oniumkatalysatoren des gleichen Typs oder eines anderen vor der Polykondensation zuzugeben.

Die Zugabe der Katalysatoren erfolgt in Lösung, um bei der Dosierung schädliche Überkonzentrationen zu vermeiden. Die Lösungsmittel sind system- und verfahrensinhärente Verbindungen wie beispielsweise Dihydroxyarylverbindungen, Diarylcarbonate oder Monohydroxyarylverbindungen. Besonders bevorzugt sind Monohydroxyarylverbindungen, weil dem Fachmann geläufig ist, dass sich die Dihydroxyarylverbindungen und Diarylcarbonate bei schon leicht erhöhten Temperaturen, insbesondere unter Katalysatoreinwirkung, leicht verändern und zersetzen. Hierunter leiden die Polycarbonatqualitäten. Beim technisch bedeutsamen Umesterungsverfahren zur Herstellung von Polycarbonat ist die bevorzugte Verbindung Phenol. Phenol bietet sich auch deshalb schon zwingend an, weil der vorzugsweise benutzte Katalysator Tetraphenylphosphoniumphenolat bei der Herstellung als Mischkristall mit Phenol isoliert wird.

Die thermoplastischen Polycarbonate sind durch die Formel (XVI) 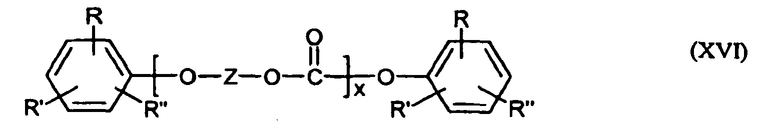 beschrieben, wobei
- R, R' und R" und Z: die bei Formel (XIII) bzw. (XII) genannte Bedeutung haben,
- X: ist eine wiederholende Struktureinheit und ist durch das Molekulargewicht des Polycarbonats charakterisiert.

Der Rest 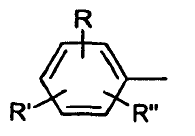 kann in Formel (XVI) als ganze Gruppe auch H und auf beiden Seiten verschieden sein.

Die erhaltenen mittleren Gewichtsmolekulargewichte der Polycarbonate betragen im Allgemeinen 15.000 bis 40.000, bevorzugt 17.000 bis 36.000, besonders bevorzugt 17.000 bis 34.000, wobei das mittlere Gewichtsmolekulargewicht über die relative Viskosität nach der Mark-Houwing Korrelation (J. M. G. Cowie, Chemie und Physik der synthetischen Polymeren, Vieweg Lehrbuch, Braunschweig/Wiesbaden, 1997, Seite 235) bestimmt wurde.

Die Polycarbonate haben einen äußerst geringen Gehalt von Kationen und Anionen von jeweils weniger als 60 ppb, bevorzugt < 40 ppb und besonders bevorzugt < 20 ppb (als Na-Kation berechnet), wobei als Kationen solche von Alkali- und Erdalkalimetallen vorliegen, welche beispielsweise als Verunreinigung aus den verwendeten Rohstoffen und den Phosphonium- und Ammoniumsalzen stammen können. Weitere Ionen wie Fe-, Ni-, Cr-, Zn-, Sn, Mo-, Al-Ionen und ihre Homologen können in den Rohstoffen enthalten sein oder durch Abtrag oder Korrosion aus den Werkstoffen der benutzten Anlage stammen. Der Gehalt dieser Ionen ist in der Summe kleiner als 2 ppm, bevorzugt kleiner als 1 ppm und besonders bevorzugt kleiner 0,5 ppm.

Als Anionen liegen solche von anorganischen Säuren und von organischen Säuren in äquivalenten Mengen vor (z. B. Chlorid, Sulfat, Carbonat, Phosphat, Phosphit, Oxalat, u.a.).

Angestrebt werden also geringste Mengen, die nur durch Verwendung reinster Rohstoffe erreicht werden können. Derart reine Rohstoffe sind z.B. nur nach Reinigungsverfahren wie Umkristallisieren, Destillieren, Umfällen mit Wäschen u. ä. erhältlich.

Die Polycarbonate können gezielt verzweigt werden. Geeignete Verzweiger sind die für die Polycarbonatherstellung bekannten Verbindungen mit drei und mehr funktionellen Gruppen, vorzugsweise solche mit drei oder mehr Hydroxylgruppen.

Einige der verwendbaren Verbindungen mit drei oder mehr phenolischen Hydroxylgruppen sind beispielsweise: Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1 -Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol und Tetra-(4-hydroxyphenyl)-methan.

Einige der sonstigen trifunktionellen Verbindungen sind: 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind: 3,3-Bis-(3-methyl-4-hydroxyphenyl)-2-oxo-2,3-dihydroindol und 1,1,1-Tri-(4-hydroxyphenyl)-ethan.

Die Verzweiger werden in Mengen im Allgemeinen von 0,02 bis 3,6 Mol %, bezogen auf die Dihydroxyarylverbindung, eingesetzt.

Das Verfahren zur Herstellung von Polycarbonat nach dem Umesterungsverfahren kann diskontinuierlich oder auch kontinuierlich gestaltet werden. Nachdem die Dihydroxyarylverbindungen und Diarylcarbonate, gegebenenfalls mit weiteren Verbindungen, als Schmelze vorliegen, wird in Gegenwart geeigneter Katalysatoren die Umsetzung gestartet. Der Umsatz bzw. das Molekulargewicht wird bei steigenden Temperaturen und fallenden Drucken in geeigneten Apparaten und Vorrichtungen durch Abführen der sich abspaltenden Monohydroxyarylverbindung solange erhöht, bis der angestrebte Endzustand erreicht ist. Durch Wahl des Verhältnisses Dihydroxyarylverbindung zu Diarylcarbonat, der durch Wahl der Verfahrensweise bzw. Anlage zur Herstellung des Polycarbonats gegebenen Verlustrate des Diarylcarbonats über die Brüden und gegebenenfalls zugesetzter Verbindungen, wie beispielsweise einer höhersiedenden Monohydroxyarylverbindung, werden die Endgruppen in Art und Konzentration geprägt.

Bezüglich der Art und Weise, in welcher Anlage und nach welcher Verfahrensweise der Prozess ausgeführt wird, gibt es keine Limitierung und Einschränkung.

Weiter gibt es keine spezielle Limitierung und Einschränkung bezüglich der Temperaturen, der Drucke und verwendeter Katalysatoren, um die Schmelzeumesterungsreaktion zwischen der Dihydroxyarylverbindung und dem Diarylcarbonat, gegebenenfalls auch anderer zugesetzter Reaktanten durchzuführen. Jede Bedingung ist möglich, solange die gewählten Temperaturen, Drucke und Katalysatoren eine Schmelzeumesterung unter entsprechend schneller Entfernung der abgespaltenen Monohydroxyarylverbindung ermöglichen.

Die Temperaturen über den gesamten Prozess liegen im Allgemeinen zwischen 180 und 330°C, die Drucke zwischen 15 bar, absolut und 0,01 mbar, absolut.

Meist wird eine kontinuierliche Verfahrensweise gewählt, weil das vorteilhaft für die Produktqualität ist.

Vorzugsweise ist das kontinuierliche Verfahren zur Herstellung von Polycarbonaten dadurch gekennzeichnet, dass eine oder mehrere Dihydroxyarylverbindungen mit dem Diarylcarbonat, gegebenenfalls auch anderer zugesetzter Reaktanten unter Verwendung von Katalysatoren, nach einer Vorkondensation ohne Abtrennen der gebildeten Monohydroxyarylverbindung in sich dann daran anschließenden mehreren Reaktions-Verdampfer-Stufen bei schrittweise steigenden Temperaturen und schrittweise fallenden Drucken das Molekulargewicht bis zum gewünschten Niveau aufgebaut wird.

Die für die einzelnen Reaktions-Verdampfer-Stufen geeigneten Vorrichtungen, Apparate und Reaktoren sind entsprechend dem Verfahrensverlauf Wärmetauscher, Entspannungsapparate, Abscheider, Kolonnen, Verdampfer, Rührbehälter und Reaktoren oder sonstige käufliche Apparate, welche die nötige Verweilzeit bei ausgewählten Temperaturen und Drucken bereitstellen. Die gewählten Vorrichtungen müssen den nötigen Wärmeeintrag ermöglichen und so konstruiert sein, dass sie den kontinuierlich wachsenden Schmelzviskositäten gerecht werden.

Alle Vorrichtungen sind über Pumpen, Rohrleitungen und Ventilen miteinander verbunden. Die Rohrleitungen zwischen allen Einrichtungen sollten selbstverständlich so kurz wie möglich sein und die Krümmungen der Leitungen so gering wie möglich gehalten werden, um unnötig verlängerte Verweilzeiten zu vermeiden. Dabei sind die äußeren, das heißt technischen Rahmenbedingungen und Belange für Montagen chemischer Anlagen zu berücksichtigen.

Zur Durchführung des Verfahrens nach einer bevorzugten kontinuierlichen Verfahrensweise können die Reaktionspartner entweder gemeinsam aufgeschmolzen oder aber die feste Dihydroxyarylverbindung in der Diarylcarbonatschmelze oder das feste Diarylcarbonat in der Schmelze der Dihydroxyarylverbindung gelöst werden oder beide Rohstoffe werden als Schmelze, bevorzugt direkt aus der Herstellung, zusammengeführt. Die Verweilzeiten der getrennten Schmelzen der Rohstoffe, insbesondere die der Schmelze der Dihydroxyarylverbindung, werden so kurz wie möglich eingestellt. Das Schmelzegemisch kann dagegen wegen des im Vergleich zu den einzelnen Rohstoffen erniedrigten Schmelzpunktes des Rohstoffgemisches bei entsprechend niedrigeren Temperaturen ohne Qualitätseinbußen länger verweilen.

Danach wird der Katalysator, vorzugsweise in Phenol gelöst, zugemischt und die Schmelze auf die Reaktionstemperatur erhitzt. Diese beträgt zu Beginn des technisch bedeutsamen Prozesses zur Herstellung von Polycarbonat aus 2,2-Bis-(4-hydroxyphenyl)-propan und Diphenylcarbonat 180 bis 220°C, vorzugsweise 190 bis 210°C, ganz besonders bevorzugt 190°C. Bei Verweilzeiten von 15 bis 90 min, vorzugsweise 30 bis 60 min, wird das Reaktionsgleichgewicht eingestellt, ohne dass die gebildete Hydroxyarylverbindung entnommen wird. Die Reaktion kann bei Atmosphärendruck, aber aus technischen Gründen auch bei Überdruck gefahren werden. Der bevorzugte Druck in technischen Anlagen beträgt 2 bis 15 bar absolut.

Das Schmelzegemisch wird in eine erste Vakuumkammer, deren Druck auf 100 bis 400 mbar, vorzugsweise auf 150 bis 300 mbar eingestellt wird, entspannt und direkt danach in einer geeigneten Vorrichtung bei gleichem Druck wieder auf die Eintrittstemperatur erhitzt. Bei dem Entspannungsvorgang wird die entstandene Hydroxyarylverbindung mit noch vorhandenen Monomeren verdampft. Nach einer Verweilzeit von 5 bis 30 min in einer Sumpfvorlage gegebenenfalls mit Umpumpung bei gleichem Druck und gleicher Temperatur wird das Reaktionsgemisch in eine zweite Vakuumkammer, deren Druck 50 bis 200 mbar, vorzugsweise 80 bis 150 mbar beträgt, entspannt und direkt danach in einer geeigneten Vorrichtung bei gleichem Druck auf eine Temperatur von 190 bis 250°C, bevorzugt 210 bis 240°C, besonders bevorzugt 210 bis 230°C, erwärmt. Auch hierbei wird die entstandene Hydroxyarylverbindung mit noch vorhandenen Monomeren verdampft. Nach einer Verweilzeit von 5 bis 30 min in einer Sumpfvorlage, gegebenenfalls mit Umpumpung, bei gleichem Druck und gleicher Temperatur wird das Reaktionsgemisch in eine dritte Vakuumkammer, deren Druck 30 bis 150 mbar, vorzugsweise 50 bis 120 mbar beträgt, entspannt und direkt danach in einer geeigneten Vorrichtung bei gleichem Druck auf eine Temperatur von 220 bis 280°C, bevorzugt 240 bis 270°C, besonders bevorzugt 240 bis 260°C, erwärmt. Auch hierbei wird die entstandene Hydroxyarylverbindung mit noch vorhandenen Monomeren verdampft. Nach einer Verweilzeit von 5 bis 20 min in einer Sumpfvorlage gegebenenfalls mit Umpumpung bei gleichem Druck und gleicher Temperatur wird das Reaktionsgemisch in eine weitere Vakuumkammer, deren Druck bei 5 bis 100 mbar, bevorzugt 15 bis 100 mbar, besonders bevorzugt 20 bis 80 mbar beträgt, entspannt und direkt danach in einer geeigneten Vorrichtung bei gleichem Druck auf eine Temperatur von 250 bis 300°C, vorzugsweise 260 bis 290°C, besonders bevorzugt 260 bis 280°C, erwärmt. Auch hierbei wird die entstandene Hydroxyarylverbindung mit noch vorhandenen Monomeren verdampft.

Die Zahl dieser Stufen, hier beispielhaft 4, kann zwischen 2 und 6 variieren. Die Temperaturen und Drucke sind bei Änderung der Stufigkeit entsprechend anzupassen, um vergleichbare Resultate zu erhalten. Die in diesen Stufen erreichte rel. Viskosität des oligomeren Carbonats liegt zwischen 1,04 und 1,20, bevorzugt zwischen 1,05 und 1,15, besonders bevorzugt zwischen 1,06 bis 1,10.

Das so erzeugte Oligocarbonat wird nach einer Verweilzeit von 5 bis 20 min in einer Sumpfvorlage gegebenenfalls mit Umpumpung bei gleichem Druck und gleicher Temperatur wie in der letzten Flash-/Verdampferstufe in einen Scheiben- oder Korbreaktor gefördert und bei 250 bis 310°C, bevorzugt 250 bis 290°C, besonders bevorzugt 250 bis 280°C, bei Drucken von 1 bis 15 mbar, vorzugsweise 2 bis 10 mbar, bei Verweilzeiten von 30 bis 90 min, vorzugsweise 30 bis 60 min, weiter aufkondensiert. Das Produkt erreicht eine rel. Viskosität von 1,12 bis 1,28, bevorzugt 1,13 bis 1,26, besonders bevorzugt 1,13 bis 1,24.

Die diesen Reaktor verlassende Schmelze wird in einem weiteren Scheiben- oder Korbreaktor auf die gewünschte Endviskosität bzw. das Endmolekulargewicht gebracht. Die Temperaturen betragen 270 bis 330°C, bevorzugt 280 bis 320°C, besonders bevorzugt 280 bis 310°C, der Druck 0,01 bis 3 mbar, vorzugsweise 0,2 bis 2 mbar, bei Verweilzeiten von 60 bis 180 min, vorzugsweise 75 bis 150 min. Die rel. Viskositäten werden auf das für die vorgesehene Anwendung nötige Niveau eingestellt und betragen 1,18 bis 1,40, bevorzugt 1,18 bis 1,36, besonders bevorzugt 1,18 bis 1,34.

Die Funktion der beiden Korbreaktoren kann auch in einem Korbreaktor zusammengefasst werden.

Die Brüden aus allen Verfahrensstufen werden unmittelbar abgeleitet, gesammelt und aufgearbeitet. Diese Aufarbeitung erfolgt in der Regel destillativ, um hohe Reinheiten der rückgewonnenen Stoffe zu erreichen. Dies kann beispielsweise gemäss Deutscher Patentanmeldung Nr. 10 100 404 erfolgen. Eine Rückgewinnung und Isolierung der abgespaltenen Monohydroxyarylverbindung in reinster Form ist aus ökonomischer und ökologischer Sicht selbstverständlich. Die Monohydroxyarylverbindung kann direkt zur Herstellung einer Dihydroxyarylverbindung oder eines Diarylcarbonats verwendet werden.

Die Scheiben- oder Korbreaktoren zeichnen sich dadurch aus, dass sie bei hohen Verweilzeiten eine sehr große, sich ständig erneuernde Oberfläche am Vakuum bereitstellen. Die Scheiben- oder Korbreaktoren sind entsprechend den Schmelzviskositäten der Produkte geometrisch ausgebildet. Geeignet sind beispielsweise Reaktoren, wie sie in der DE 44 47 422 C2 und EP A 1 253 163, oder Zweiwellenreaktoren, wie sie in der WO A 99/28 370 beschrieben sind.

Die Oligocarbonate, auch sehr niedermolekulare, und die fertigen Polycarbonate werden in der Regel mittels Zahnradpumpen, Schnecken unterschiedlichster Bauart oder Verdrängerpumpen spezieller Bauart gefördert.

Besonders geeignete Werkstoffe zur Herstellung der Apparate, Reaktoren, Rohrleitungen, Pumpen und Armaturen sind nicht rostende Stähle vom Typ Cr Ni (Mo) 18/10 wie z. B. 1.4571 oder 1. 4541 (Stahlschlüssel 2001, Verlag: Stahlschlüssel Wegst GmbH, Th-Heuss-Straße 36, D-71672 Marbach) und Ni-Basislegierungen vom Typ C, wie z. B. 2.4605 oder 2.4610 (Stahlschlüssel 2001, Verlag: Stahlschlüssel Wegst GmbH, Th-Heuss-Straße 36, D-71672 Marbach). Die nicht rostenden Stähle werden bis zu Prozesstemperaturen von etwa 290°C und die Ni-Basislegierungen bei Prozesstemperaturen oberhalb von etwa 290°C benutzt.

Das Polycarbonat kann aber auch zum Beispiel nach dem Phasengrenzflächenverfahren hergestellt werden. Dieses Verfahren zur Polycarbonatsynthese ist mannigfaltig in der Literatur beschrieben, so unter anderem bei
- Schnell, "Chemistry and Physics of Polycarbonates", Polymer Reviews, Volume 9, Interscience Publishers, New York, London, Sydney 1964, S. 33-70;
- D.C. Prevorsek, B.T. Debona und Y. Kesten, Corporate Research Center, Allied Chemical Corporation, Morristown, New Jersey 07960: "Synthesis of Poly(ester Carbonate) Copolymers" in Journal of Polymer Science, Polymer Chemistry Edition, Vol. 18,(1980)"; S. 75-90,
- D. Freitag, U. Grigo, P.R. Müller, N. Nouvertne', BAYER AG, "Polycarbonates" in Encyclopedia of Polymer Science and Engineering, Volume 1 1, Second Edition, 1988, S. 651-692 und schließlich
- Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145,
sowie z.B. in EP-A 0 517 044 und vielen anderen Patentanmeldungen.

Gemäß diesem Verfahren erfolgt die Phosgenierung eines in wässrig-alkalischer Lösung (oder Suspension) vorgelegten Dinatriumsalzes eines Bisphenols (oder eines Gemisches verschiedener Bisphenole) in Gegenwart eines inerten organischen Lösungsmittels oder Lösungsmittelgemisches, welches eine zweite Phase ausbildet. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten aufkondensiert. Die organische Phase wird schließlich abgetrennt und das Polycarbonat durch verschiedene Aufarbeitungsschritte daraus isoliert.

In diesem Verfahren wird eine wässrige Phase aus NaOH, einem oder mehreren Bisphenolen und Wasser verwendet, wobei die Konzentration dieser wässrigen Lösung bezüglich der Summe der Bisphenole, nicht als Natriumsalz sondern als freies Bisphenol gerechnet, zwischen 1 und 30 Gew.-%, bevorzugt zwischen 3 und 25 Gew.-%, besonders bevorzugt zwischen 3 und 8 Gew.-% für Polycarbonate mit einem Mw > 45000 und 12 bis 22 Gew.-% für Polycarbonate mit einem Mw < 45000, variieren kann. Dabei kann es bei höheren Konzentrationen notwendig sein, die Lösungen zu temperieren. Das zur Lösung der Bisphenole verwendete Natriumhydroxid kann fest oder als wässrige Natronlauge verwendet werden. Die Konzentration der Natronlauge richtet sich nach der Zielkonzentration der angestrebten Bisphenolatlösung, liegt aber in der Regel zwischen 5 und 25 Gew.-%, bevorzugt 5 und 10 Gew.-%, oder aber wird konzentrierter gewählt und anschließend mit Wasser verdünnt. Bei dem Verfahren mit anschließender Verdünnung werden Natronlaugen mit Konzentrationen zwischen 15 und 75 Gew. %, bevorzugt 25 und 55 Gew.-%, gegebenenfalls temperiert, verwendet. Der Alkaligehalt pro mol Bisphenol ist sehr von der Struktur des Bisphenols abhängig, bewegt sich aber in der Regel zwischen 0,25 mol Alkali/mol Bisphenol und 5,00 mol Alkali/mol Bisphenol, bevorzugt 1,5 - 2,5 Mol Alkali/mol Bisphenol und im Fall, dass Bisphenol A als alleiniges Bisphenol verwendet wird, 1,85 - 2,15 mol Alkali. Wird mehr als ein Bisphenol verwendet, so können diese zusammen gelöst werden. Es kann jedoch vorteilhaft sein, die Bisphenole getrennt in optimaler alkalischer Phase zu lösen und die Lösungen getrennt zu dosieren oder aber vereinigt der Reaktion zuzuführen. Weiterhin kann es von Vorteil sein, das oder die Bisphenole nicht in Natronlauge sondern in mit zusätzlichem Alkali ausgestatteter, verdünnter Bisphenolatlösung zu lösen. Die Lösevorgänge können von festem Bisphenol, meist in Schuppen oder Prillform oder auch von geschmolzenem Bisphenol ausgehen. Das eingesetzte Natriumhydroxid bzw. die Natronlauge kann nach dem Amalgamverfahren oder dem sogenannten Membranverfahren hergestellt worden sein. Beide Verfahren werden seit langer Zeit benutzt und sind dem Fachmann geläufig. Bevorzugt wird Natronlauge aus dem Membranverfahren verwendet.

Die so angesetzte wässrige Phase wird zusammen mit einer organischen Phase bestehend aus Lösungsmitteln für Polycarbonat, die gegenüber den Reaktanten inert sind und eine zweite Phase bilden, phosgeniert.

Die gegebenenfalls praktizierte Dosierung von Bisphenol nach oder während der Phosgen-einleitung kann so lange durchgeführt werden, wie Phosgen oder dessen unmittelbare Folgeprodukte, die Chlorkohlensäureester in der Reaktionslösung vorhanden sind.

Die Synthese von Polycarbonaten aus Bisphenolen und Phosgen im alkalischen Milieu ist eine exotherme Reaktion und wird in einem Temperaturbereich von -5°C bis 100°C, bevorzugt 15°C bis 80°C, ganz besonders bevorzugt 25 bis 65°C durchgeführt, wobei je nach Lösungsmittel oder Lösungsmittelgemisch gegebenenfalls unter Überdruck gearbeitet werden muss.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, (α,α'-Bis-(hydroxyphenyl)-diisopropylbenzole düsopropylbenzole, sowie deren alkylierte, kernalkylierte und kemhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,1-Bis-(4-hydroxyphenyl)-m/p diisopropylbenzol, 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-m/p-diisopropyl-benzol und 1,1-Bis-(4-hydroxyphenyl)-3,3,5-trimethylcyclohexan.

Besonders bevorzugte Diphenole sind 4,4'-Dihydroxydiphenyl, 1,1-Bis-(4-hydroxyphenyl)-phenylethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in den US-A 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964, S. 28ff; S.102ff", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle der Copolycarbonate werden mehrere Diphenole eingesetzt, wobei selbstverständlich die verwendeten Bisphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Die organische Phase kann aus einem oder Mischungen mehrerer Lösungsmittel bestehen. Geeignete Lösungsmittel sind chlorierte Kohlenwasserstoffe (aliphatische und/oder aromatische), bevorzugt Dichlormethan, Trichlorethylen, 1,1,1-Trichlorethan, 1,1,2- Trichlorethan und Chlorbenzol und deren Gemische. Es können jedoch auch aromatische Kohlenwasserstoffe wie Benzol, Toluol, m/p/o-Xylol oder aromatische Ether wie Anisol allein, im Gemisch oder zusätzlich oder im Gemisch mit chlorierten Kohlenwasserstoffen verwendet werden. Eine andere Ausführungsform der Synthese verwendet Lösungsmittel welche Polycarbonat nicht lösen sondern nur anquellen. Es können daher auch Fällungsmittel für Polycarbonat in Kombination mit Lösungsmitteln verwendet werden. Wobei dann als Lösungsmittel auch in der wässrigen Phase lösliche Lösungsmittel wie Tetrahydrofuran, 1,3/1,4-Dioxan oder 1,3-Dioxolan verwendet werden können, wenn der Lösungsmittelpartner die zweite organische Phase bildet.

Die beiden Phasen die das Reaktionsgemisch bilden werden gemischt, um die Reaktion zu beschleunigen. Das geschieht durch Eintrag von Energie über Scherung, d.h. Pumpen oder Rührer oder durch statische Mischer bzw. durch Erzeugung turbulenter Strömung mittels Düsen und/oder Blenden. Auch Kombinationen dieser Maßnahmen werden angewendet, oft auch wiederholt in zeitlicher oder apparativer Abfolge. Als Rührer werden bevorzugt Anker-, Propeller-, MIG-Rührer, usw. eingesetzt, wie sie z.B. im Ullmann, "Encyclopedia of Industrial Chemistry", 5. Auflage, Vol B2 , S. 251 ff. beschrieben sind. Als Pumpen werden Kreiselpumpen, oft auch mehrstufige, wobei 2 bis 9stufige bevorzugt sind, eingesetzt. Als Düsen und/oder Blenden werden Lochblenden bzw. an deren Stelle verjüngte Rohrstücke oder auch Venturi- oder Lefosdüsen eingesetzt.

Der Eintrag des Phosgens kann gasförmig oder flüssig oder gelöst in Lösungsmittel erfolgen. Der verwendete Überschuss an Phosgen, bezogen auf die Summe der eingesetzten Bisphenole liegt zwischen 3 und 100 Mol-% bevorzugt zwischen 5 und 50 Mol-%. Wobei über einmalige oder mehrfache Nachdosierung von Natronlauge oder entsprechende Nachdosierung von Bisphenolatlösung der pH-Wert der wässrigen Phase während und nach der Phosgendosierung im alkalischen Bereich, bevorzugt zwischen 8,5 und 12 gehalten wird, während er nach der Katalysatorzugabe bei 10 bis 14 liegen sollte. Die Temperatur während der Phosgenierung beträgt 25 bis 85°C, bevorzugt 35 bis 65°C, wobei je nach verwendetem Lösungsmittel auch unter Überdruck gearbeitet werden kann.

Die Phosgendosierung kann direkt in das beschriebene Gemisch der organischen und wässrigen Phase erfolgen oder aber auch ganz oder teilweise, vor der Mischung der Phasen, in eine der beiden Phasen, die anschließend mit der entsprechenden anderen Phase gemischt wird. Weiterhin kann das Phosgen ganz oder teilweise in einen rückgeführten Teilstrom des Synthesegemisches aus beiden Phasen dosiert werden, wobei dieser Teilstrom vorzugsweise vor der Katalysatorzugabe rückgeführt wird. In einer anderen Ausführungsform werden die beschriebene wässrige Phase mit der das Phosgen enthaltenden organischen Phase gemischt und anschließend nach einer Verweilzeit von 1 Sekunde bis 5 min, bevorzugt 3 Sekunden bis 2 Minuten dem oben erwähnten rückgeführten Teilstrom zugesetzt oder aber die beiden Phasen, die beschriebene wässrige Phase mit der das Phosgen enthaltenden organischen Phase werden direkt in dem oben erwähnten rückgeführten Teilstrom gemischt. In allen diesen Ausführungsformen sind die oben beschriebenen pH-Wertbereiche zu beachten und gegebenenfalls durch einmalige oder mehrfache Nachdosierung von Natronlauge oder entsprechende Nachdosierung von Bisphenolatlösung einzuhalten. Ebenso muss der Temperaturbereich gegebenenfalls durch Kühlung oder Verdünnung der Reaktionsmischung eingehalten werden.

Die Durchführung der Polycarbonatsynthese kann kontinuierlich oder diskontinuierlich geschehen. Die Reaktion kann daher in Rührkesseln, Rohrreaktoren, Umpumpreaktoren oder Rührkesselkaskaden oder deren Kombinationen erfolgen, wobei durch Verwendung der bereits erwähnten Mischorgane sicherzustellen ist, dass wässrige und organische Phase sich möglichst erst dann entmischen, wenn das Synthesegemisch ausreagiert hat, d.h. kein verseifbares Chlor von Phosgen oder Chlorkohlensäureestern mehr enthält.

Die zur Regelung des Molekulargewichtes benötigten monofunktionellen Kettenabbrecher, wie Phenol oder Alkylphenole, insbesondere Phenol, p-tert.Butylphenol, iso-Octylphenol, Cumylphenol, deren Chlorkohlensäureester oder Säurechloride von Monocarbonsäuren bzw. Gemischen aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel dazu dosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet, oder auch Gemische der Polyphenole oder der Säurechloride.

Einige der verwendbaren Verbindungen mit drei oder mehr als drei phenolischen Hydroxylgruppen sind beispielsweise
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1 -Tri-(4-hydroxyphenyl)-ethan,
Tri-(4-hydroxyphenyl)-phenylmethan,
2,2-Bis-(4,4-bis-(4-hydroxyphenyl)-cyclohexyl]-propan,
2,4-Bis-(4-hydroxyphenyl-isopropyl)-phenol,
Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1 -Tris-(4-hydroxyphenyl)-ethan.

Die in der Phasengrenzflächensynthese verwendeten Katalysatoren sind tert. Amine, insbesondere Triethylamin, Tributylamin, Trioctylamin, N-Ethylpiperidin, N-Methylpiperidin, N-i/n-Propylpiperidin; quartäre Ammoniumsalze wie Tetrabutylammonium-/Tributylbenzylammonium-/Tetraethylammonium-hydroxid/-chlorid/-bromid/-hydrogensulfat/-tetrafluoroborat; sowie die den Ammoniumverbindungen entsprechenden Phosphoniumverbindungen. Ammonium- und Phosphoniumverbindungen werden in diesem Kontext gemeinsam auch als Oniumverbindungen bezeichnet.

Diese Verbindungen sind als typische Phasengrenzflächen-Katalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es wird eine Oniumverbindung oder Gemische aus Oniumverbindungen als Katalysatoren verwendet, dann ist eine Zugabe vor der Phosgendosierung bevorzugt.

Die Dosierung des Katalysators oder der Katalysatoren kann in Substanz, in einem inerten Lösungsmittel, vorzugsweise dem der Polycarbonatsynthese, oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden.

Die Gesamtmenge der verwendeten Katalysatoren liegt zwischen 0,001 bis 10 Mol-% bezogen auf Mole eingesetzte Bisphenole, bevorzugt 0,01 bis 8 Mol-%, besonders bevorzugt 0,05 bis 5 Mol-%.

Nach Eintrag des Phosgens kann es vorteilhaft sein, eine gewisse Zeit die organische Phase und die wässrige Phase zu durchmischen, bevor gegebenenfalls Verzweiger, sofern dieser nicht gemeinsam mit dem Bisphenolat dosiert wird, Kettenabbrecher und Katalysator zugegeben werden. Eine derartige Nachrührzeit kann nach jeder Dosierung von Vorteil sein. Diese Nachrührzeiten liegen, insofern sie eingelegt werden, zwischen 10 Sekunden und 60 Minuten, bevorzugt zwischen 30 sec. und 40 Minuten, besonders bevorzugt zwischen 1 und 15 min.

Das ausreagierte, höchstens noch Spuren, bevorzugt < 2 ppm, an Chlorkohlensäureestern enthaltende mindestens zweiphasige Reaktionsgemisch lässt man zur Phasentrennung absitzen. Die wässrige alkalische Phase wird evt. ganz oder teilweise als wässrige Phase zurück in die Polycarbonatsynthese geleitet oder aber der Abwasseraufarbeitung zugeführt, wo Lösungsmittel-und Katalysatoranteile abgetrennt und rückgeführt werden. In einer anderen Variante der Aufarbeitung wird nach Abtrennung der organischen Verunreinigungen, insbesondere von Lösungsmitteln und Polymerresten, und gegebenenfalls nach der Einstellung eines bestimmten pH-Wertes, z.B. durch Natronlaugezugabe, das Salz abgetrennt, welches z. B. der Chloralkalielektrolyse zugeführt werden kann, während die wässrige Phase gegebenenfalls wieder der Synthese zugeführt wird.

Die organische, das Polymer enthaltende Phase muss nun von allen Kontaminationen alkalischer, ionischer oder katalytischer Art gereinigt werden. Sie enthält auch nach einem oder mehreren Absetzvorgängen, gegebenenfalls unterstützt durch Durchläufe durch Absetzkessel, Rührkessel, Coalescer oder Separatoren bzw. Kombinationen aus diesen Maßnahmen - wobei gegebenenfalls Wasser in jedem oder einigen Trennschritten gegebenenfalls unter Verwendung von aktiven oder passiven Mischorganen zudosiert werden kann - noch Anteile der wässrigen alkalischen Phase in feinen Tröpfchen sowie den Katalysator, in der Regel ein tert. Amin.

Nach dieser groben Abtrennung der alkalischen, wässrigen Phase wird die organische Phase ein oder mehrmals mit verdünnten Säuren, Mineral-, Carbon- Hydroxycarbon-und/oder Sulfonsäuren gewaschen. Bevorzugt sind wässrige Mineralsäuren insbesondere Salzsäure, phosphorige Säure und Phosphorsäure oder Mischungen dieser Säuren. Die Konzentration dieser Säuren sollte im Bereich 0,001 bis 50 Gew.-%, bevorzugt 0,01 bis 5 Gew.-% liegen.

Weiterhin wird die organische Phase mit entsalztem oder destilliertem Wasser wiederholt gewaschen. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen aus diesen Maßnahmen, wobei das Waschwasser zwischen den Waschschritten gegebenenfalls unter Verwendung von aktiven oder passiven Mischorganen zudosiert werden kann.

Zwischen diesen Waschschritten oder auch nach der Wäsche können gegebenenfalls Säuren, vorzugsweise gelöst im Lösungsmittel welches der Polymerlösung zugrunde liegt, zugegeben werden. Bevorzugt werden hier Chlorwasserstoffgas und Phosphorsäure oder phosphorige Säure verwendet, die gegebenenfalls auch als Mischungen eingesetzt werden können.

Die so erhaltene, gereinigte Polymerlösung sollte nach dem letzten Trennvorgang nicht mehr als 5 Gew.-%, bevorzugt weniger als 1 Gew.-%, ganz besonders bevorzugt weniger als 0,5 Gew.-% Wasser enthalten.

Die Isolierung des Polymers aus der Lösung kann durch Verdampfen des Lösungsmittels mittels Temperatur, Vakuum oder eines erhitzten Schleppgases erfolgen. Andere Isolierungsmethoden sind Kristallisation und Fällung.

Geschieht die Konzentrierung der Polymerlösung und eventuell auch die Isolierung des Polymeren durch Abdestillation des Lösungsmittels, gegebenenfalls durch Überhitzung und Entspannung, so spricht man von einem 'Flash-Verfahren" siehe auch "Thermische Trennverfahren", VCH Verlagsanstalt 1988, S. 114; wird statt dessen ein geheiztes Trägergas zusammen mit der einzudampfenden Lösung versprüht, so spricht man von einer "Sprühverdampfung/Sprühtrocknung" beispielhaft beschrieben in Vauck, "Grundoperationen chemischer Verfahrenstechnik", Deutscher Verlag für Grundstoffindustrie 2000, 11.Auflage, S. 690. Alle diese Verfahren sind in der Patentliteratur und in Lehrbüchern beschrieben und dem Fachmann geläufig.

Bei der Entfernung des Lösungsmittels durch Temperatur (Abdestillieren) oder dem technisch effektiveren Flash-Verfahren erhält man hochkonzentrierte Polymerschmelzen. Bei dem bekannten Flashverfahren werden Polymerlösungen wiederholt unter leichtem Überdruck auf Temperaturen oberhalb des Siedepunktes unter Normaldruck erhitzt und diese, bezüglich des Normaldruckes, überhitzten Lösungen anschließend in ein Gefäß mit niedrigerem Druck, z.B. Normaldruck, entspannt. Es kann dabei von Vorteil sein, die Aufkonzentrationsstufen, oder anders ausgedrückt die Temperaturstufen der Überhitzung nicht zu groß werden zu lassen sondern lieber ein zwei- bis vierstufiges Verfahren zu wählen.

Aus den so erhaltenen hochkonzentrierten Polymerschmelzen können die Reste des Lösungsmittels entweder direkt aus der Schmelze mit Ausdampfextrudern (BE-A 866 991, EP-A 0 411 510, US-A 4 980 105, DE-A 33 32 065), Dünnschichtverdampfern(EP-A 0 267 025), Fallfilmverdampfern, Strangverdampfern oder durch Friktionskompaktierung (EP-A 0 460 450), gegebenenfalls auch unter Zusatz eines Schleppmittels, wie Stickstoff oder Kohlendioxid oder unter Verwendung von Vakuum (EP-A 003 996, EP-A 0 256 003, US-A 4 423 207), entfernt werden, alternativ auch durch anschließende Kristallisation (DE-A 3 429 960) und Ausheizen der Reste des Lösungsmittels in der festen Phase (US-A 3 986 269, DE-A 2 053 876).

Granulate erhält man bevorzugt durch direktes Abspinnen der Schmelze und anschließender Granulierung oder aber durch Verwendung von Austragsextrudern von denen in Luft oder unter Flüssigkeit, meist Wasser, abgesponnen wird. Werden Extruder benutzt, so kann man der Schmelze, vor diesem Extruder, gegebenenfalls unter Einsatz von statischen Mischern oder durch Seitenextruder im Extruder, Additive zusetzen.

Bei einer Versprühung wird die Polymerlösung gegebenenfalls nach Erhitzung entweder in ein Gefäß mit Unterdruck verdüst oder mittels einer Düse mit einem erhitzten Trägergas, z.B. Stickstoff, Argon oder Wasserdampf in ein Gefäß mit Normaldruck verdüst. In beiden Fällen erhält man in Abhängigkeit von der Konzentration der Polymerlösung Pulver (verdünnt) oder Flocken (konzentriert) des Polymers, aus dem gegebenenfalls auch die letzten Reste des Lösungsmittels wie oben entfernt werden müssen. Anschließend kann mittels eines Compoundierextruders und anschließender Abspinnung Granulat erhalten werden. Auch hier können Additive , wie oben beschrieben, in der Peripherie oder dem Extruder selbst, zugesetzt werden. Oftmals muss vor der Extrusion aufgrund der geringen Schüttdichte der Pulver und Flocken ein Kompaktierungsschritt für das Polymerpulver eingesetzt werden.

Aus der gewaschenen und gegebenenfalls noch aufkonzentrierten Lösung des Polycarbonates kann durch Zugabe eines Fällungsmittels für Polycarbonat das Polymer weitgehend kristallin ausgefällt werden. Hierbei ist es vorteilhaft erst eine geringe Menge des Fällungsmittels zuzugeben und gegebenenfalls auch Wartezeiten zwischen den Zugaben der Chargen an Fällungsmittel einzulegen. Es kann außerdem von Vorteil sein, verschiedene Fällungsmittel einzusetzen. Verwendung als Fällungsmittel finden hier z.B. Kohlenwasserstoffe, insbesondere Heptan, i-Octan, Cyclohexan und Alkohole wie Methanol, Ethanol, i-Propanol.

Bei der Fällung wird in der Regel die Polymerlösung langsam einem Fällungsmittel zugesetzt, hier werden meist Alkohole wie Methanol, Ethanol, i-Propanol., aber auch Cyclohexan oder Ketone wie Aceton als Fällungsmittel verwendet.

Die so erhaltenen Materialien werden wie bei der Sprühverdampfung beschrieben zu Granulat verarbeitet und gegebenenfalls additiviert.

Nach anderen Verfahren werden Fällungs- und Kristallisations-Produkte oder amorph erstarrte Produkte in feinkörniger Form durch Überleiten von Dämpfen eines oder mehrer Fällungsmittel für Polycarbonat, unter gleichzeitiger Erhitzung unterhalb der Glastemperatur kristallisiert und weiter zu höheren Molekulargewichten aufkondensiert. Handelt es sich dabei um Oligomere, gegebenenfalls mit unterschiedlichen Endgruppen (Phenolische und Kettenabbrecherenden), so spricht man von Festphasenaufkondensation.

### Thermostablisatoren:

Bevorzugt werden die erfindungsgemäßen Themostabilisatoren gemäß den Formeln (I) bis (XI) nach Erreichen des gewünschten Molekulargewichts des Polycarbonats zugegeben. Zur wirksamen Einmischung des Thermostabilisators sind statische Mischer oder andere zu einer homogenen Einmischung führende Mischer, wie beispielsweise Extruder, geeignet. In letzterem Falle wird der Thermostabilisator über einen Seitenextruder der Polymerschmelze, evtl. zusammen mit anderen Stoffen, wie z.B. Entformungsmittel dem Polymerhauptstrom zugegeben.

Die erfindungsgemäßen Thermostabilisatoren können einzeln oder in beliebigen Mischungen untereinander oder mehreren verschiedenen Mischungen der Polymerschmelze zugesetzt werden. Außerdem können auch Mischungen der erfindungsgemäßen Thermosstabilisatoren mit freien Sulfonsäurederivaten, wie z.B. Benzol- oder Toluolsulfonsäure zugegeben werden.

Die Thermostabilisatoren haben bevorzugt Schmelzpunkte größer als 30°C, bevorzugt größer 40°C und besonders bevorzugt größer 50°C und Siedepunkte bei 1 mbar größer 150°C, bevorzugt größer 200°C und besonders bevorzugt größer 230°C.

Die erfindungsgemäßen Ester von organischen Schwefel-enthaltenden Säuren können in Mengen von kleiner 100 ppm bezogen auf das Polycarbonat eingesetzt werden, bevorzugt kleiner 50 ppm bezogen auf das Polycarbonat, besonders bevorzugt kleiner 30 ppm und ganz besonders bevorzugt kleiner 15 ppm.

Bevorzugt werden mindestens 0,5 ppm, besonders bevorzugt 1 ppm, ganz besonders bevorzugt 1,5 ppm Thermostabilisator oder Mischungen davon eingesetzt. Insbesondere werden die Thermostabilisatoren bezogen auf das Polycarbonat in Mengen von 2 bis 10 ppm eingesetzt.

Wahlweise können sie auch in Mischungen mit freien Säuren, wie beispielsweise ortho-Phosphorsäure oder anderen als Stabilisatoren geeigneten Additive, wie z.B. Benzol- oder Toluolsulfonsäuren zugesetzt werden. Die Menge an freien Säuren bzw. anderen Stabilisatoren beträgt (bezogen auf Polycarbonat) bis zu 20 ppm, vorzugsweise bis zu 10 ppm, insbesondere 0 bis 5 ppm.

Bezüglich der Zugabeform der erfindungsgemäßen Ester von organischen Schwefel-enthaltenden Säuren gibt es keine Limitierung. Die erfindungsgemäßen Ester von organischen Schwefel-enthaltenden Säuren beziehungsweise deren Mischungen können als Feststoff, also als Pulver, in Lösung oder als Schmelze der Polymerschmelze zugesetzt werden. Eine andere Art der Dosierung ist die Verwendung eines Masterbatches (vorzugsweise mit Polycarbonat), das auch weitere Additive, wie beispielsweise andere Stabilisatoren oder Entformungsmittel enthalten kann.

Bevorzugt werden die erfindungsgemäßen Ester von organischen Schwefel-enthaltenden Säuren in flüssiger Form zugegeben. Da die zu dosierenden Mengen sehr gering sind, werden vorzugsweise Lösungen der erfindungsgemäßen Ester verwendet.

Geeignete Lösemittel sind solche, die den Prozess nicht stören, chemisch inert sind und schnell verdampfen.

Als Lösemittel kommen alle organischen Lösemittel mit einem Siedepunkt bei Normaldruck von 30 bis 300°C, bevorzugt von 30 bis 250°C und besonders bevorzugt von 30 bis 200°C sowie auch Wasser - dazu zählt auch Kristallwasser - in Frage. Vorzugsweise werden solche Verbindungen gewählt, die in den jeweiligen Prozessen vorkommen. Eventuell verbleibende Reste mindern, je nach Anforderungsprofil des herzustellenden Produktes, nicht die Qualität.

Lösemittel sind neben Wasser Alkane, Cycloalkane und Aromaten, die auch substituiert sein können. Die Substituenten können aliphatische, cycloaliphatische oder aromatische Reste in unterschiedlicher Kombination sowie Halogene oder eine Hydroxylpruppe sein. Heteroatome, wie beispielsweise Sauerstoff, können auch zwischen aliphatischen, cycloaliphatischen oder aromatischen Resten Brückenglieder sein, wobei die Reste gleich oder unterschiedlich sein können. Weitere Lösemittel können auch Ketone und Ester organischer Säuren sowie cyclische Carbonate sein. Weiterhin kann der Thermostabilisator auch in Glycerinmonostearat gelöst und zudosiert werden.

Beispiele sind neben Wasser n-Pentan, n- Hexan, n-Heptan und deren Isomere, Chlorbenzol, Methanol, Ethanol, Propanol, Butanol und deren Isomere, Phenol, o-, m- und p-Kresol, Aceton, Diethylether, Dimethylketon, Polyethylenglycole, Polypropylenglycole, Essigsäureethylester, Ethylencarbonat und Propylencarbonat.

Bevorzugt geeignet sind für den Polycarbonatprozess Wasser, Phenol, Propylencarbonat, Ethylencarbonat und Toluol.

Besonders bevorzugt geeignet sind Wasser, Phenol und Propylencarbonat.

Als Abbauprodukte der erfindungsgemäßen Thermostabilisatoren der Formeln (I) bis (XI) entstehen freie Sulfonsäuren sowie teilweise noch veresterte Sulfonsäuren und auch Alkohole.

Weiterhin kann das erhaltene Polycarbonat zur Veränderung von Eigenschaften mit weiteren, üblichen Additiven und Zusatzstoffen (z.B. Hilfs- und Verstärkungsstoffe) nach Zugabe der erfindungsgemäßen Inhibitoren versehen werden. Der Zusatz von Additiven und Zuschlagsstoffen dient der Verlängerung der Nutzungsdauer (z.B. Hydrolyse- oder Abbaustabilisatoren), der Verbesserung der Farbstabilität (z.B. Thermo- und UV-Stabilisatoren), der Vereinfachung der Verarbeitung (z.B. Entformer, Fließhilfsmittel), der Verbesserung der Gebrauchseigenschaften (z.B. Antistatika), der Verbesserung des Flammschutzes, der Beeinflussung des optischen Eindrucks (z.B. organische Farbmittel, Pigmente) oder der Anpassung der Polymereigenschaften an bestimmte Belastungen (Schlagzähmodifikatoren, fein zerteilte Mineralien, Faserstoffe, Quarzmehl, Glas- und Kohlenstofffasern). Alles kann beliebig kombiniert werden, um die gewünschten Eigenschaften einzustellen und zu erreichen. Solche Zuschlagstoffe und Additive werden z.B. in "Plastics Additives", R. Gächter und H. Müller, Hanser Publishers 1983, beschrieben.

Diese Additive und Zuschlagstoffe können einzeln oder in beliebigen Mischungen oder mehreren verschiedenen Mischungen der Polymerschmelze zugesetzt werden und zwar direkt bei der Isolierung des Polymeren oder aber nach Aufschmelzung von Granulat in einem sogenannten Compoundierungsschritt.

Dabei können die Additive und Zuschlagstoffe beziehungsweise deren Mischungen als Feststoff, also als Pulver, oder als Schmelze der Polymerschmelze zugesetzt werden. Eine andere Art der Dosierung ist die Verwendung von Masterbatches oder Mischungen von Masterbatches der Additive oder Additivmischungen.

Der Zusatz dieser Stoffe erfolgt vorzugsweise auf herkömmlichen Aggregaten zum fertigen Polycarbonat, kann jedoch, je nach den Erfordernissen, auch auf einer anderen Stufe im Herstellverfahren des Polycarbonats erfolgen.

Geeignete Additive sind beispielsweise beschrieben in Additives for Plastics Handbook, John Murphy, Elsevier, Oxford 1999 oder Plastics Additives Handbook Hans Zweifel, Hanser, München 2001.

Weitere Anwendungen sind beispielsweise, ohne jedoch den Gegenstand der vorliegenden Erfindung einzuschränken :
- 1.: Sicherheitsscheiben, die bekanntlich in vielen Bereichen von Gebäuden, Fahrzeugen und Flugzeugen erforderlich sind, sowie als Schilde von Helmen.
- 2.: Folien.
- 3.: Blaskörper (s.a. US-A 2 964 794), beispielsweise 1 bis 5 Gallon Wasserflaschen.
- 4.: Lichtdurchlässige Platten, wie Massivplatten oder insbesondere Hohlkammerplatten, beispielsweise zum Abdecken von Gebäuden wie Bahnhöfen, Gewächshäusern und Beleuchtungsanlagen.
- 5.: Optische Datenspeicher, wie Audio CD's, CD-R(W)'s, DCD's, DVD-R(W)'s, Minidiscs und den Folgeentwicklungen.
- 6.: Ampelgehäuse oder Verkehrsschilder.
- 7.: Schaumstoffe mit offener oder geschlossener gegebenenfalls bedruckbarer Oberfläche.
- 8.: Fäden und Drähte (s.a. DE-A 11 37 167).
- 9.: Lichttechnische Anwendungen, gegebenenfalls unter Verwendung von Glasfasern für Anwendungen im transluzenten Bereich.
- 10.: Transluzente Einstellungen mit einem Gehalt an Bariumsulfat und oder Titandioxid und oder Zirkoniumoxid bzw. organischen polymeren Acrylatkautschuken (EP-A 0 634 445, EP-A 0 269 324) zur Herstellung von lichtdurchlässigen und lichtstreuenden Formteilen.
- 11.: Präzisionsspritzgussteile, wie Halterungen, z.B. Linsenhalterungen; hier werden gegebenenfalls Polycarbonate mit Glasfasern und einem gegebenenfalls zusätzlichen Gehalt von 1-10 Gew.-% Molybdändisulfid (bez. auf die gesamte Formmasse) verwendet.
- 12.: optische Geräteteile, insbesondere Linsen für Foto- und Filmkameras (DE-A 27 01 173).
- 13.: Lichtübertragungsträger, insbesondere Lichtleiterkabel (EP-A 0 089 801) und Beleuchtungsleisten.
- 14.: Elektroisolierstoffe für elektrische Leiter und für Steckergehäuse und Steckverbinder sowie Kondensatoren.
- 15.: Mobiltelefongehäuse.
- 16.: Network interface devices.
- 17.: Trägermaterialien für organische Fotoleiter.
- 18.: Leuchten, Scheinwerferlampen, Streulichtscheiben oder innere Linsen.
- 19.: Medizinische Anwendungen wie Oxygenatoren, Dialysatoren.
- 20.: Lebensmittelanwendungen, wie Flaschen, Geschirr und Schokoladenformen.
- 21.: Anwendungen im Automobilbereich, wie Verglasungen oder in Form von Blends mit ABS als Stoßfänger.
- 22.: Sportartikel wie Slalomstangen, Skischuhschnallen.
- 23.: Haushaltsartikel, wie Küchenspülen, Waschbecken, Briefkästen.
- 24.: Gehäuse, wie Elektroverteilerkästen.
- 25.: Gehäuse für elektrische Geräte wie Zahnbürsten, Föne, Kaffeemaschinen, Werkzeugmaschinen, wie Bohr-, Fräs-, Hobelmaschinen und Sägen.
- 26.: Waschmaschinen-Bullaugen.
- 27.: Schutzbrillen, Sonnenbrillen, Korrekturbrillen bzw. deren Linsen.
- 28.: Lampenabdeckungen.
- 29.: Verpackungsfolien.
- 30.: Chip-Boxen, Chipträger, Boxen für Si-Wafer.
- 31.: Sonstige Anwendungen wie Stallmasttüren oder Tierkäfige.

Die nachfolgenden Beispiele sollen die vorliegende Erfindung illustrieren, ohne sie jedoch einschränken zu wollen :

### Beispiele

Die relative Lösungsviskosität wird in Dichlormethan bei einer Konzentration von 5 g/l bei 25°C bestimmt.

Der Gehalt an phenolischem OH wird durch IR-Messung erhalten. Zu diesem Zweck wird eine Differenzmessung von einer Lösung aus 2 g Polymer in 50 ml Dichlormethan gegenüber reinem Dichlormethan vermessen und die Extinktionsdifferenz bei 3582 cm⁻¹ bestimmt.

### Analytikvorschrift zur Ermittlung der Restmonomere:

Die Probe wird in Dichlormethan gelöst und in Aceton/Methanol umgefällt. Das ausgefällte Polymer wird abgetrennt und das Filtrat eingeengt. Die Quantifizierung der Restmonomere erfolgt durch Reverse-Phase. Chromatographie im Fließmittelgradienten 0,04 % Phosphorsäure-Acetonitril. Die Detektion erfolgt über UV.

Auf diese Weise werden das Bisphenol (BPA), Phenol und Diphenylcarbonat (DPC) bestimmt.

Unter GMS wird ein Gemisch aus Glycerinmonopalmitat und Glycerinmonostearat verstanden.

Der GMS-Gesamtgehalt setzt sich zusammen aus dem freien GMS (GMS _{frei}), dem GMS-Carbonat (GMS-CO₃) und dem eingebauten GMS. Letzterer wird durch Differenzbildung errechnet.

Ein Teil der Probe wird bei etwa 80°C alkalisch hydrolysiert und anschließend mit Salzsäure auf etwa pH 1 eingestellt. Diese Lösung wird mit tert-Butylmethylether extrahiert und der Extrakt getrocknet. Nach Derivatisierung erfolgt die gaschromatographische Analyse auf einer Kapillarsäule in Verbindung mit einem Flammenionisationsdetektor. Die quantitative Auswertung erfolgt über einen inneren Standard und ergibt den Gesamtgehalt an GMS.

Ein anderer Teil der Probe wird in Dichlormethan gelöst und derivatisiert. Nach gaschromatographischer Auftrennung auf einer Kapillarsäule und Detektion mittels Flammenionisationsdetektor (FID) erfolgt die Quantifizierung über einen inneren Standard. Es werden die Gehalte an freiem GMS und GMS-Carbonat erhalten.

Quantifizierung von Glycerinmonostearat (GMS) und Glycerinmonostearat-carbonat (GMS-Carbonat) in Polycarbonat per GC-FID:

Ca. 0,5 g Probe werden in 5 ml CH₂Cl₂ gelöst und mit internem Standard (z.B. n-Alkan) versetzt. Zu dieser Lösung werden ca. 5 ml tert.-Butylmethylether (MTBE) gegeben, um das Polymer auszufällen. Die Suspension wird dann geschüttelt und anschließend zentrifugiert. Eine definierte Menge (3 ml) der überstehenden Lösung wird abpipetiert und unter Stickstoff-Atmosphäre bis zur Trockne eingeengt. Der Rückstand wird mit MSTFA-Lösung (N-Methyl-N-(trimethylsilyl)-trifluoroacetamide) silyliert. Die filtrierte Lösung wird per Gaschromatographie (GC) (z.B. HP 6890) chromatographiert. Detektion erfolgt per Flammenionisationsdetektor (FID).

### Einsatzmaterialien:

### Polycarbonat B:

| | |
|---|---|
| relative Lösungsviskosität | 1,201 |
| Gehalt an phenolischem OH | 240 ppm |
| DPC | 80ppm |
| BPA | 10 ppm |
| Phenol | 65 ppm |
| GMS_{frei} | 288 ppm |
| GMS-CO₃ | < 10 ppm |

### Thermostabilisator A:

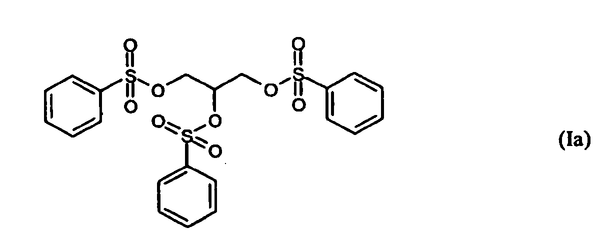

Der Einfluss der erfindungsgemäßen Thermostabilisatoren auf die Verbesserung der thermischen Stabilität eines Polycarbonats wird anhand der langzeitigen thermischen Belastbarkeit des Polycarbonats untersucht.

### Beispiel A

### Synthese von Thermostabilisator A:

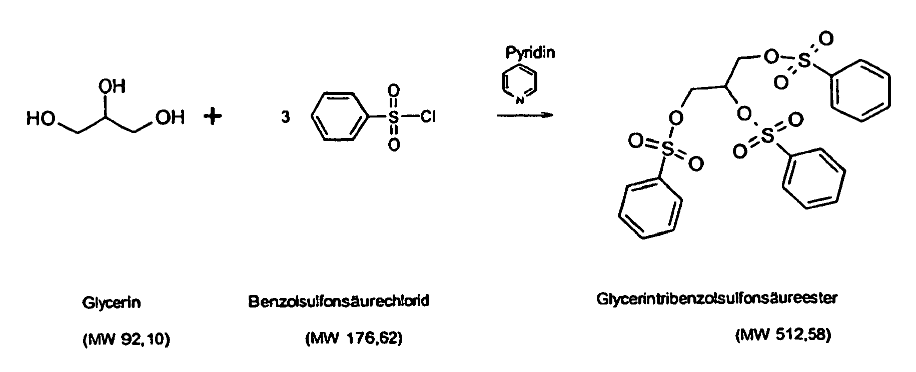

552,6 g (6,0 Mol) Glycerin der Fa. KMF und 4746g (60 Mol) Pyridin der Firma Aldrich werden unter Stickstoff vorgelegt und homogen gelöst. 3196,8 g (18,1Mol) Benzolsulfonsäurechlorid werden sehr langsam zugetropft, wobei eine Temperatur von 30 bis 35°C nicht überschritten werden sollte. Anschließend wird 1 Stunde bei 40°C gerührt.

### Aufarbeitung:

Der Ansatz wird sehr langsam in eine Mischung aus 3 Liter destilliertem Wasser , etwa 4kg Eis und 3 Liter Dichlormethan unter starkem Rühren abgelassen. Hierbei sollte eine Temperatur von 35°C nicht überschritten werden.

Die organische Phase wird anschließend in ca. 10 Liter Methanol gefällt, abgesaugt und so lange mit Methanol gewaschen bis ein Nachweis in der Dünnschichtchromatographie auf ein sauberes Produkt hinweist.

Anschließend wird bis zur Massenkonstanz im Vakuumtrockenschrank bei 60°C getrocknet.

Ausbeute: 970g (31,54 % der Theorie) weißes Pulver

### Analytik:

- Schmelzpunkt Fp. 81-83°C
- ¹H-NMR (400 MHz, TMS, CDCl₃) δ = 7,8 ppm (m, 6H), 7,7 (m, 3H), 7,55 (m, 6H), 4,75 (m, 1H), 4,1 (d, 4H).

### Beispiel 1

2,5 kg Polycarbonat B werden mit 4 ppm Thermostabilisator A (als Pulver), bezogen auf das Polycarbonat, auf einem Extruder homogen gemischt (Ausgangsmaterial). Dieses Gemisch wird jeweils für 10 min. bei 340°C und bei 360° thermisch belastet und anschließend chemisch analysiert (Tabelle 1).

### Vergleichsbeispiel 1

Wie in Beispiel 1, jedoch werden statt 4 ppm Thermostabilisator A 3 ppm ortho-Phosphorsäure eingemischt.

**Tabelle 1**

| | | **Ausgangsmaterial** | **340°C** | **360°C** |
|---|---|---|---|---|
| Relative Viskosität | Bsp. 1 | 20,1 | 19.6 | 19,4 |
| | Vgl. Bsp. 1 | 20,1 | 19.7 | 19,3 |
| GMS_{frei}/ ppm | Bsp. 1 | 288 | 60 | 69 |
| | Vgl. Bsp. 1 | 288 | < 10 | < 10 |
| GMS-CO₃/ ppm | Bsp. 1 | < 10 | < 10 | < 10 |
| | Vgl. Bsp. 1 | < 10 | 70 | 30 |
| DPC Rückspaltung/ ppm | Bsp. 1 | 80 | 81 | 80 |
| | Vgl. Bsp. 1 | 80 | 500 | 500 |

Die Beispiele beweisen eindrucksvoll die verbesserte Stabilität des Polycarbonats unter thermischer Belastung im Vergleich zum Vergleichsbeispiel 1 mit Phosphorsäure als Stabilisator, was sich im höheren Anteil an freiem GMS, in einem geringeren Anteil an GMS-CO₃ und in einer deutlich geringeren Rückbildungsrate zu Diphenylcarbonat DPC äußert. Der Gehalt an Restmonomeren (DPC) lässt sich somit auf einem relativ geringen Level halten. Dies ist besonders für die Anwendung in optischen Datenspeichern wichtig, da beim Verspritzen des Polycarbonates der ausgedampfte Monomeranteil sich als Belag auf dem Spritzgusswerkzeug (Stamper) festsetzen kann (blade out), was unerwünscht ist.

## Patentansprüche

1. Zusammensetzung enthaltend Polycarbonat und einen Ester von organischen Schwefel-enthaltenden Säuren ausgewählt aus mindestens einer Verbindung
der Formel (I) 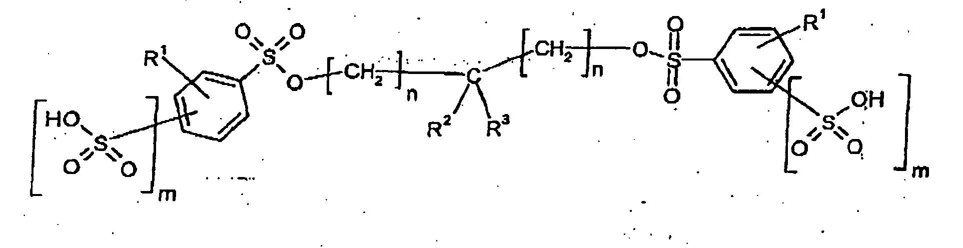 der Formel (VIIb) oder (Ib), 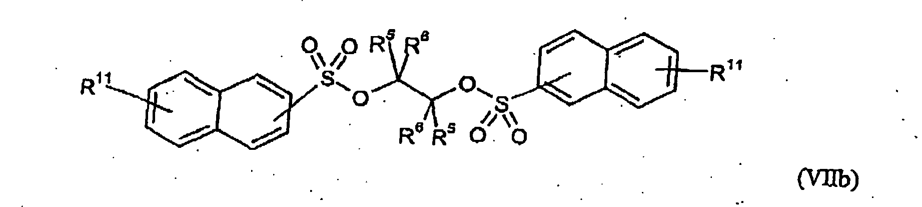 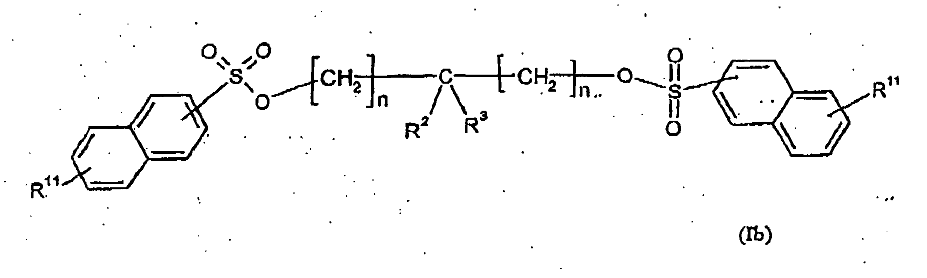 in welcher
R¹ unabhängig für Wasserstoff oder unsubstituiertes oder durch Halogen substituiertes C₁-C₂₀-Alkyl steht,
R² und R³ unabhängig voneinander für Wasserstoff, C₁-C₆-Alkyl oder C₄-C₃₀-Alkylcarboxyl oder für den Rest steht 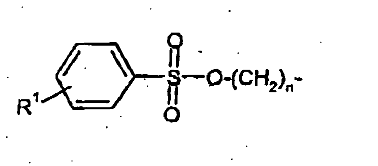
worin
R¹ die oben genannte Bedeutung hat,
m für 0 oder 1 steht,
n für 1 oder 2 steht,
R⁵ und R⁶ unabhängig für Wasserstoff oder für C₁-C₂₀-Alkyl, wobei Alkyl durch Halogen substituiert sein kann, und
R¹¹ unabhängig für Wasserstoff oder Di-(C₁-C₄)-Alkylamino steht,
wobei der Ester in einer positiven Menge von bis zu 100 ppm bezogen auf das Gewicht des Polycarbonats enthalten ist.

2. Zusammensetzung gemäß Anspruch 1 enthaltend Polycarbonat und einen Ester von organischen Schwefelenthaltenden Säuren ausgewählt aus mindestens einer Verbindung
der Formel (I) 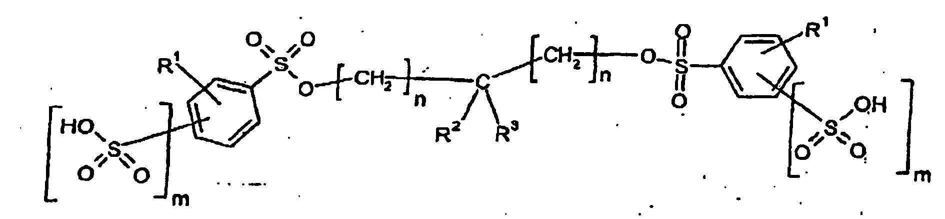 der Formel (VIIb), 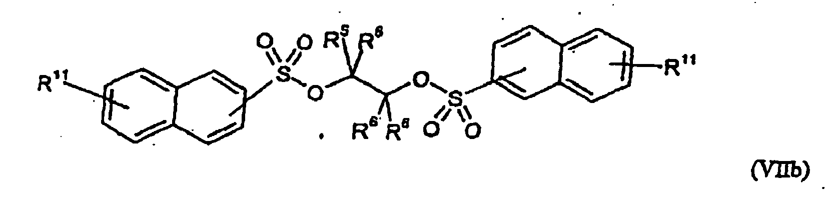 wobei die Reste R¹, R², R³, m und n sowie R⁵, R⁶ und R¹¹ die in Anspruch 1 genannte Bedeutung haben.

3. Zusammensetzung gemäß Anspruch 1, enthaltend Verbindung der Formel

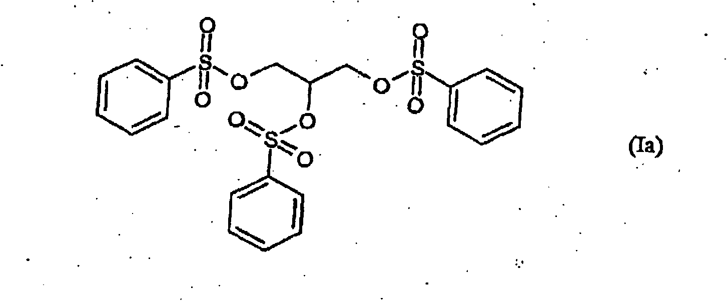

4. Zusammensetzung gemäß Anspruch 1, enthaltend mindestens eine Verbindung der Formel

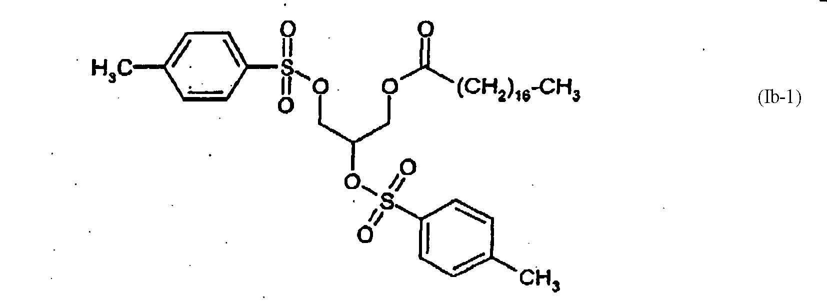

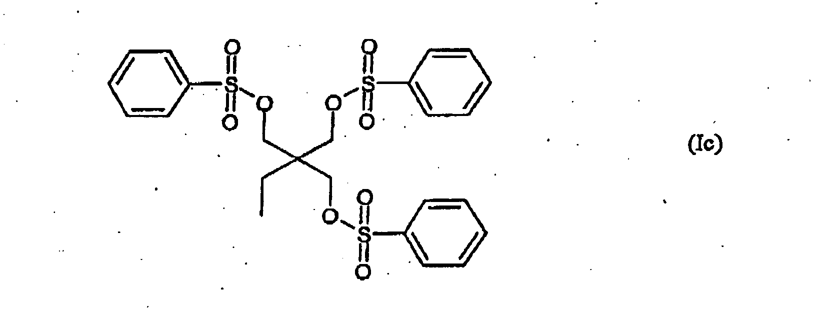

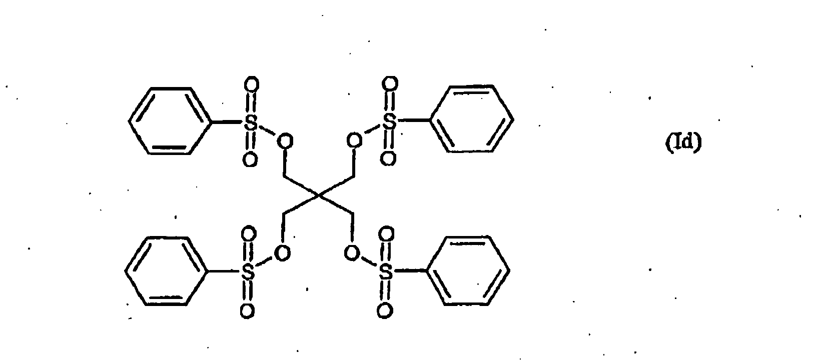

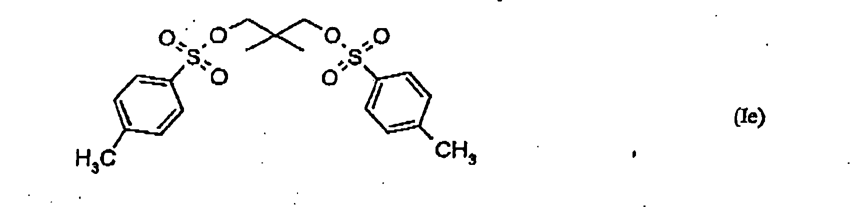

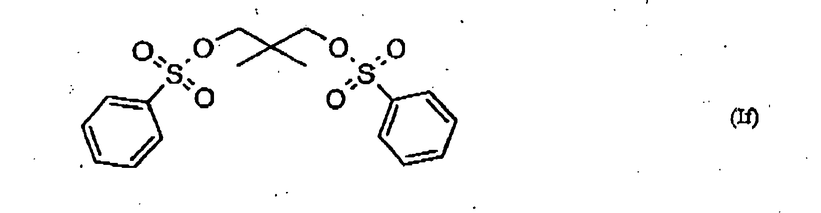

5. Zusammensetzung gemäß Anspruch 1, wobei der Ester in einer positiven Menge von bis zu 50 ppm bezogen auf das Gewicht des Polycarbonats enthalten ist.

6. Zusammensetzung gemäß Anspruch 1, enthaltend Abbauprodukte der Ester.

7. Verfahren zur Herstellung von Zusammensetzungen gemäß Anspruch 1, wobei Polycarbonat mit den Estern von organischen Schwefel-enthaltenden Säuren gemischt und compoundiert wird.

8. Formteile, Formkörper und Extrudate erhältlich aus Zusammensetzung gemäß Anspruch 1.

## Claims

1. Composition containing polycarbonate and an ester of organic sulfur-containing acids selected from at least one compound
having the formula (I) 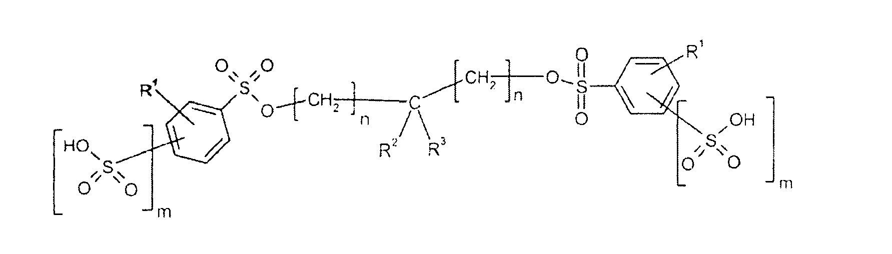 having the formula (VIIb) or (Ib) 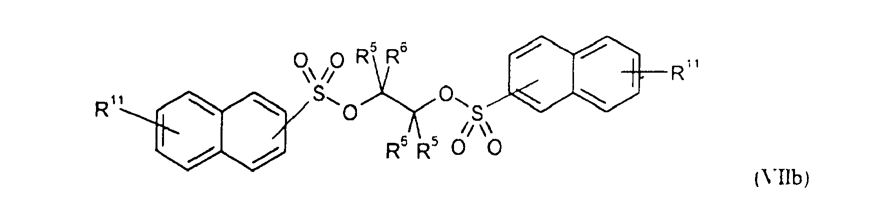 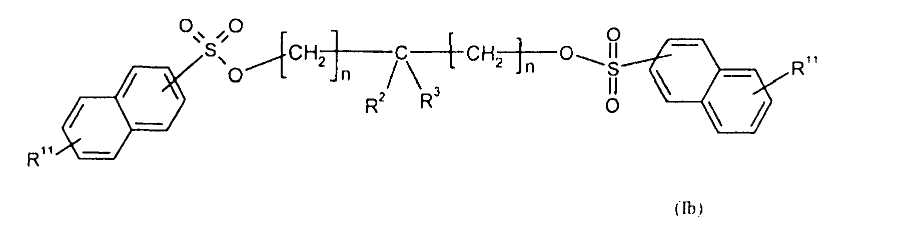 in which
R¹ independently stands for hydrogen or for unsubstituted or halogen-substituted C₁-C₂₀ alkyl,
R² and R³ mutually independently stand for hydrogen, C₁-C₆ alkyl or C₄-C₃₀ alkyl carboxyl or for the radical 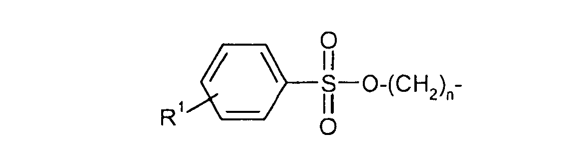
wherein
R¹ has the meaning given above,
m stands for 0 or 1,
n stands for 1 or 2,
R⁵ and R⁶ independently stand for hydrogen or for C₁-C₂₀ alkyl, wherein alkyl can be substituted by halogen, and
R¹¹ independently stands for hydrogen or di-(C₁-C₄) alkyl amino,
wherein the ester is included in a positive amount of up to 100 ppm relative to the weight of the polycarbonate.

2. Composition according to claim 1 containing polycarbonate and an ester of organic sulfur-containing acids selected from at least one compound
having the formula (I) 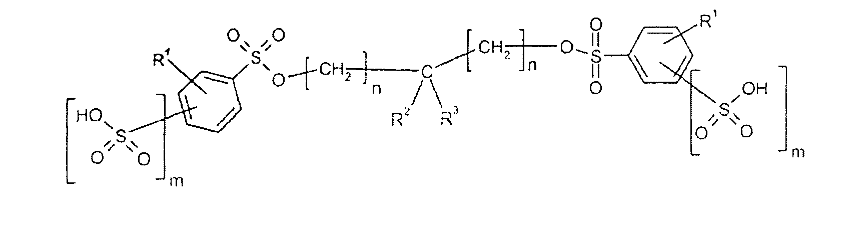 having the formula (VIIb) 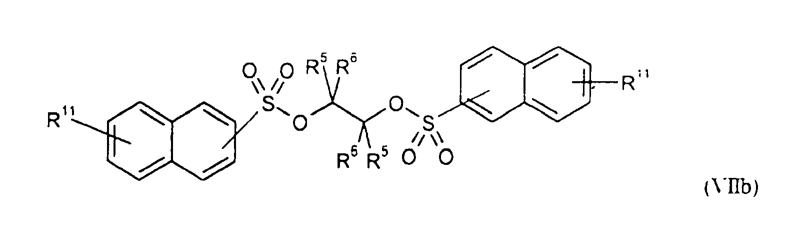 wherein the radicals R¹, R², R³, m and n and R⁵, R⁶ and R¹¹ have the meaning given in claim 1.

3. Composition according to claim 1, containing a compound having the formula

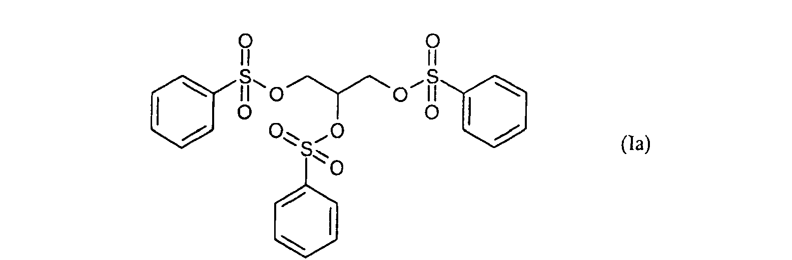

4. Composition according to claim 1, containing at least one compound having the formula

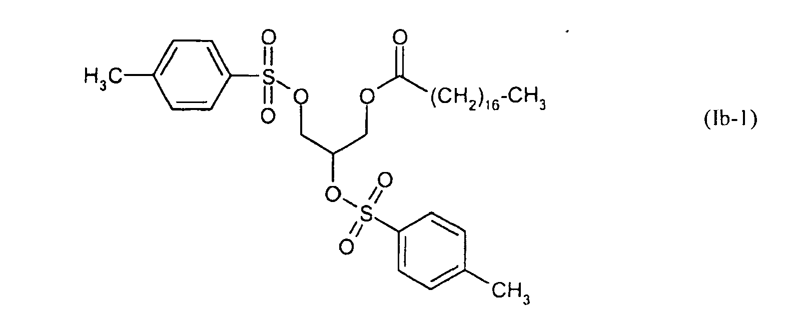

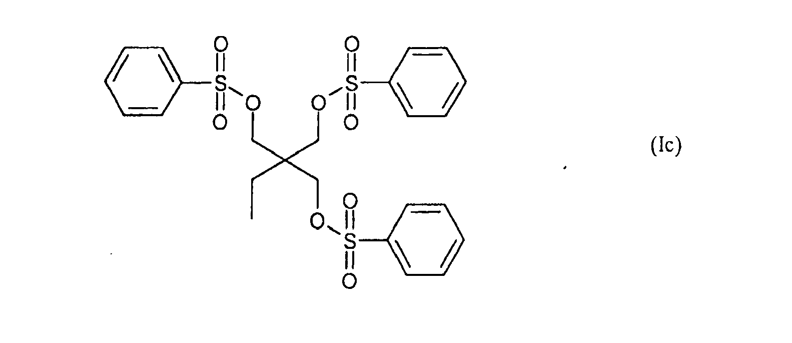

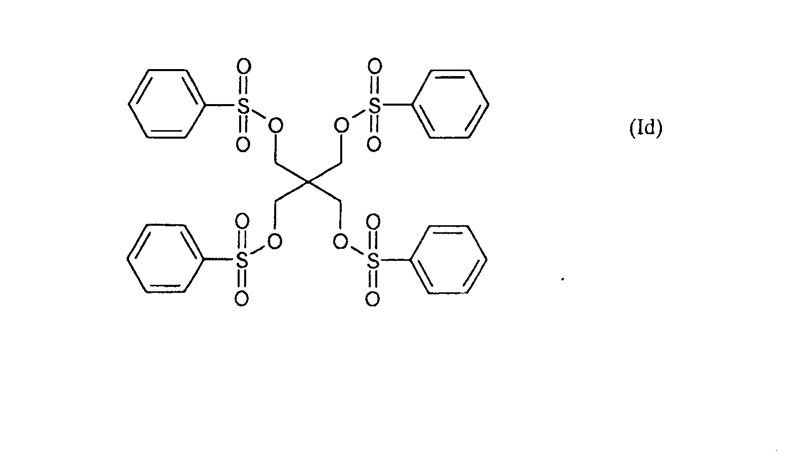

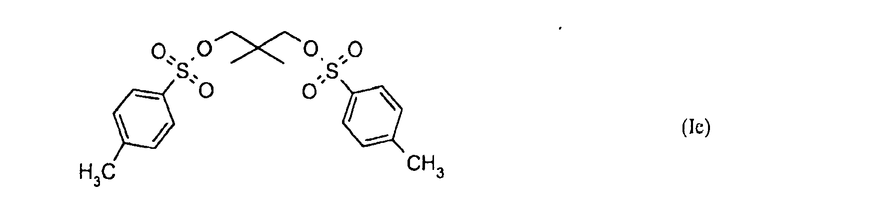

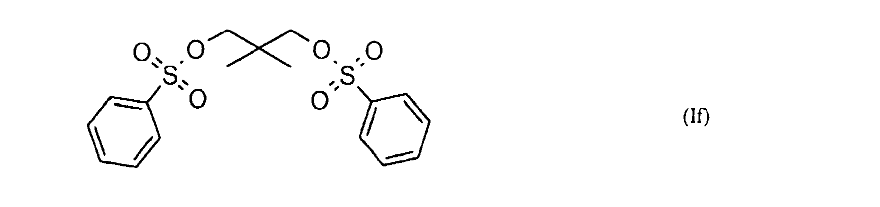

5. Composition according to claim 1, wherein the ester is included in a positive amount of up to 50 ppm relative to the weight of the polycarbonate.

6. Composition according to claim 1, containing degradation products of the esters.

7. Process for the production of compositions according to claim 1, wherein polycarbonate is mixed with the esters of organic sulfur-containing acids and compounded.

8. Moulded parts, moulded articles and extrudates obtainable from the composition according to claim 1.

## Revendications

1. Composition contenant du polycarbonate et un ester d'acides organiques contenant du soufre choisie parmi au moins un composé
de la formule (I) 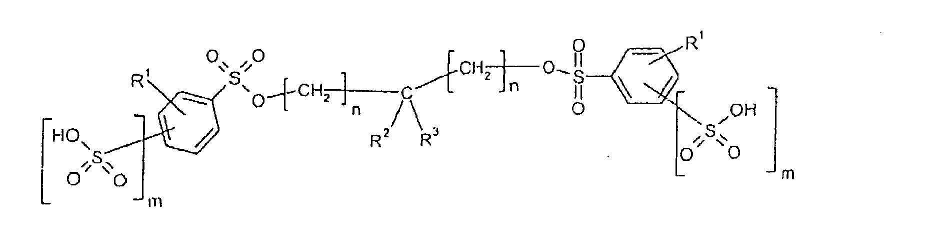 de la formule (VIIb) ou (Ib), 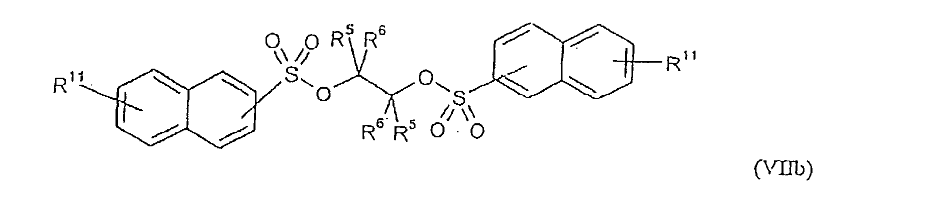 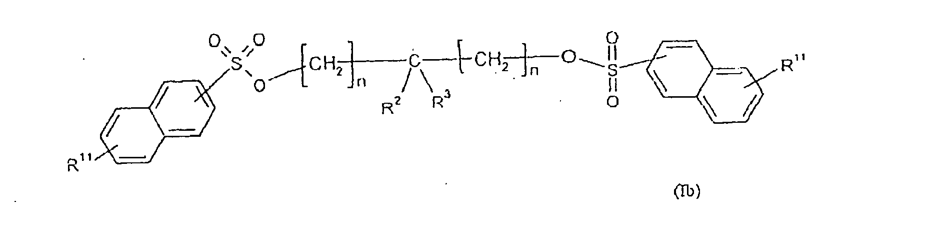 dans lesquelles
R¹ représente indépendamment l'hydrogène ou un groupe C₁-C₂₀ alkyle non substitué ou substitué par un halogène,
R² et R³ représentent indépendamment l'un de l'autre l'hydrogène, un groupe C₁-C₆ alkyle ou C₄-C₃₀ alkylcarboxyle ou représente le reste 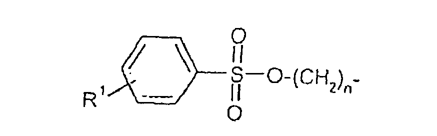
dans lequel
R¹ a la signification citée ci-dessus,
m est égal à 0 ou à 1,
n est égal à 1 ou à 2,
R⁵ et R⁶ représentent indépendamment l'hydrogène ou un groupe C₁-C₂₀ alkyle, le groupe alkyle pouvant être substitué par un halogène, et
R¹¹ représente indépendamment l'hydrogène ou un groupe di-(C₁-C₄)alkylamino,
l'ester étant contenu dans une quantité positive allant jusqu'à 100 ppm rapporté au poids du polycarbonate.

2. Composition selon la revendication 1 contenant du polycarbonate et un ester d'acides organiques contenant du soufre choisie parmi au moins un composé
de la formule (I) 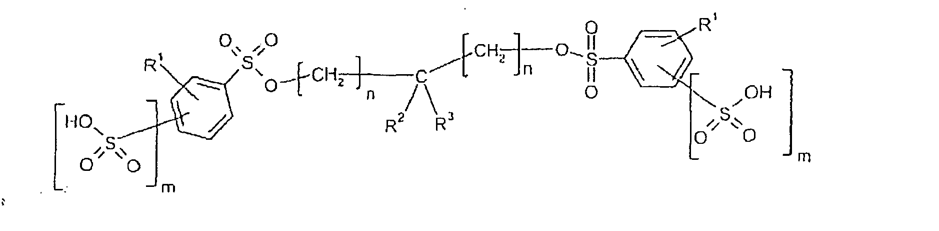 de la formule (VIIb) 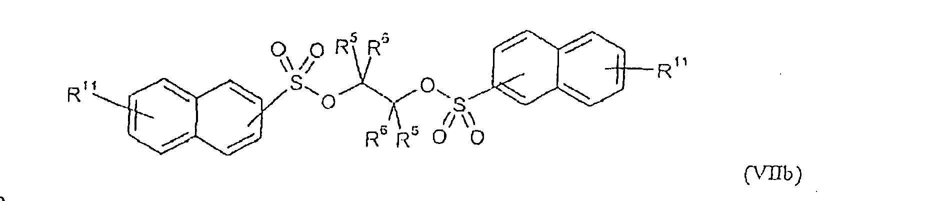 dans laquelle les restes R¹, R², R³, m et n ainsi que R⁵, R⁶ et R¹¹ ont les significations indiquées dans la revendication 1.

3. Composition selon la revendication 1 contenant un composé de la formule

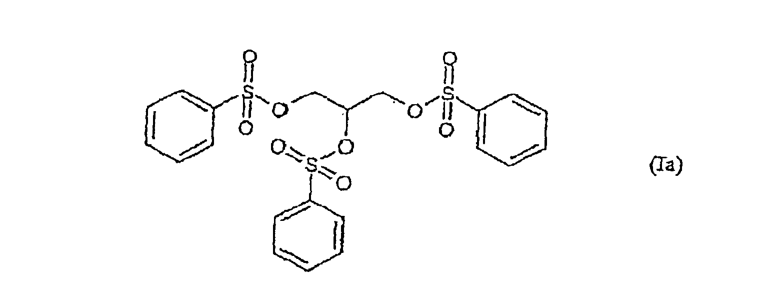

4. Composition selon la revendication 1 contenant au moins un composé de la formule

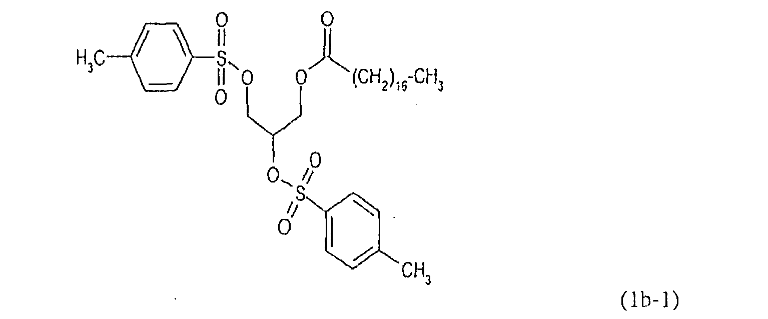

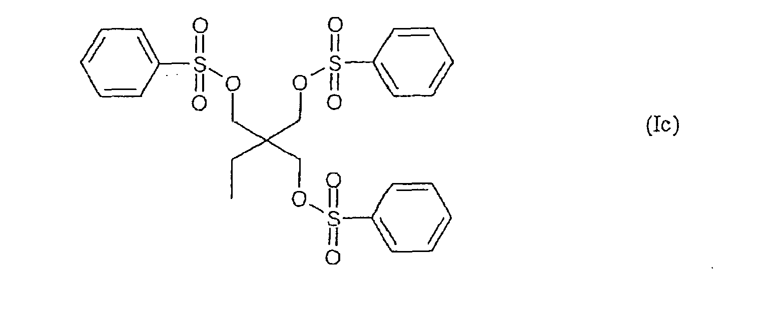

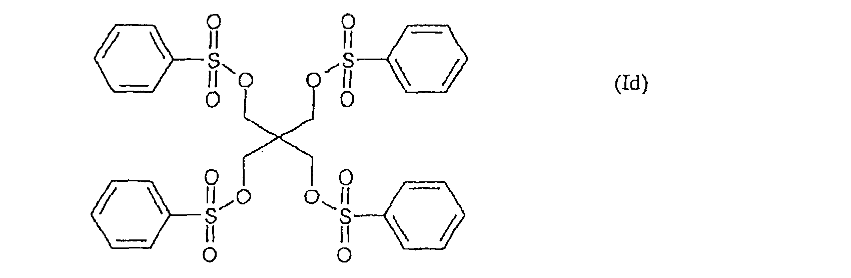

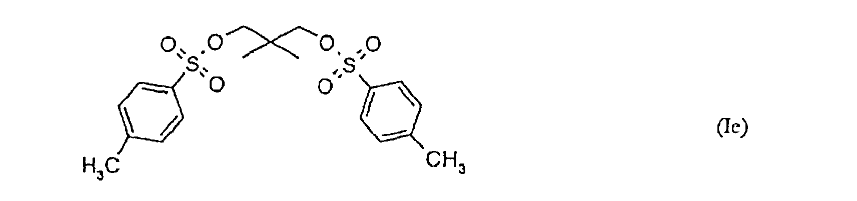

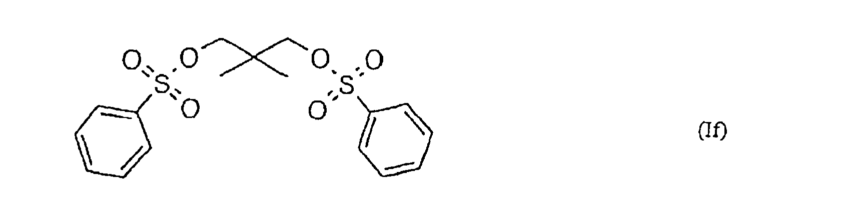

5. Composition selon la revendication 1, dans laquelle l'ester est contenu dans une quantité positive allant jusqu'à 50 ppm rapportés au poids du polycarbonate.

6. Composition selon la revendication 1 contenant des produits de décomposition de l'ester.

7. Procédé pour la préparation de compositions selon la revendication 1, dans lequel on mélange et on combine du polycarbonate avec les esters d'acides organiques contenant du soufre.

8. Pièces moulées, corps moulés et extrudés obtenus à partir de compositions selon la revendication 1.
